(19) Europäisches Patentamt

European Patent Office

Office européen des brevets

(11) **EP 0 813 321 A2**

(12) **EUROPÄISCHE PATENTANMELDUNG**

(43) Veröffentlichungstag:
17.12.1997 Patentblatt 1997/51

(51) Int. Cl.$^6$: **H04L 7/04**, H04L 5/04,
H04L 25/49, B60R 16/02

(21) Anmeldenummer: 97108850.5

(22) Anmeldetag: 03.06.1997

(84) Benannte Vertragsstaaten:
AT BE CH DE DK ES FI FR GB GR IE IT LI LU MC
NL PT SE

(30) Priorität: 14.06.1996 DE 19623750
19.10.1996 DE 19643205
23.01.1997 DE 19702271

(71) Anmelder:
TEMIC TELEFUNKEN microelectronic GmbH
74072 Heilbronn (DE)

(72) Erfinder:
• Ammler, Manfred
86673 Bergheim (DE)

• Fendt, Günter
86529 Schrobenhausen (DE)
• Hora, Peter
86529 Schrobenhausen (DE)
• Müller, Norbert
86529 Schrobenhausen (DE)

(74) Vertreter:
Maute, Hans-Jürgen, Dipl.-Ing.
TEMIC TELEFUNKEN microelectronic GmbH
Postfach 35 35
74025 Heilbronn (DE)

(54) **Verfahren und Steuersystem zum Übertragen von Daten**

(57) Bei dem Verfahren sowie dem Steuersystem zum Übertragen digitaler Daten wird ein in seiner Taktfrequenz steuerbarer Datenübernahmetaktgenerator entsprechend einer aus einer Sychroniserungsimpulsfolge abgeleiteten Taktfrequenzinformation angepaßt. Zur Erfassung der Taktfrequenzinformation und zur Erzeugung des Datenübernahmetaktes wird auf die gleiche Oszillatorquelle zugegriffen. Die Ansprüche an die Langzeittaktgenauigkeit des Oszillators sind dabei bereits durch einfache RC-Oszillatoren zu erfüllen. Die Taktfrequenz kann sendeseitig mittels geänderter Taktfrequenzinformation gewechselt werden. Auch die Anpassung bei Abweichungen der empfangsseitigen Oszillatorfrequenz ist möglich. Bevorzugt ist dabei die Taktfrequenzinformation aus dem reziproken Wert der Zeitdauer wenigstens eines Synchronisationsimpulses abzuleiten. Die Zeitdauer wird dann mittels eines ersten Zählers in einer Taktfrequenzinformationserfassungsschaltung durch das Zählen der Anzahl der Oszillatortakte erfaßt und der Zählwert dann an einen Datenübernahmetaktgenerator weitergeleitet. Dieser wird vom gleichen Oszillator getaktet und zählt die Anzahl der Oszillatortakte ab und löst beim Erreichen bestimmter Schwellen entsprechende Taktsignale aus. Durch Anpassung von Numerikgliedern können auch pulsweitenmodulierte Signale verarbeitet werden.

FIG.1

EP 0 813 321 A2

## Beschreibung

Die Erfindung betrifft ein Verfahren zum Übertragen von digitalen Daten sowie ein Steuersystem zur Durchführung dessen.

Die Übertragung von digitalen Daten ist in einer Vielzahl von Systemen erforderlich, bei denen eine Zentraleinheit, zum Beispiel eine zentrale Rechenheit oder ein zentrales Steuergerät, mit einem oder mehreren peripheren Modulen Daten austauschen muß. Hierfür werden üblicherweise Bussysteme verwendet, über die die einzelnen Daten mit einer bestimmten Taktfrequenz gesendet werden. Damit ein peripheres Modul die von der Zentraleinheit gesendeten digitalen Daten einwandfrei erkennen kann, ist es erforderlich, daß das periphere Modul die ankommenden Daten mit der gleichen Taktfrequenz übernimmt, mit der sie gesendet wurden.

Es ist bekannt, sowohl in der Zentraleinheit als auch in den peripheren Modulen hochgenau arbeitende Taktsignalgeneratoren mit aufeinander abgestimmter Taktfrequenz zu verwenden, um sicherzustellen, daß die Zentraleinheit und die peripheren Module für einen Datenaustausch mit derselben Taktfrequenz arbeiten. Derartige Taktsignalgeneratoren benötigen jedoch Präzisionsbauteile, wie zum Beispiel Schwingquarze, um die Taktfrequenz auch über lange Zeit sehr genau konstant halten zu können. Daher sind solche Taktsignalgeneratoren relativ aufwendig und teuer.

Außerdem sind bspw. aus der DE 26 57 365 und der US 4,988,989 Verfahren zur Synchronisation des Datenübernahme- oder Impulsrahmentaktes bekannt, bei denen zum zeitlichen Abgleich zwischen Sende- und Empfangstakt periodisch ein Synchronisationsimpuls oder eine Synchronsationsimpulsfolge bekannter Form, bspw. mit bekannten Pegelwechseln gesendet wird. Darüber hinaus ist aus der US 4,988,989 eine Master-Slave-Kommunikationseinrichtung bekannt, bei der ein initialisierendes Datensignal einen separaten Timer im Slave aktiviert. Dadurch wird eine zeitsynchrone Abtastung der nachfolgend gesendeten Daten möglich. In der DE 26 57 365 B1 ist ein verfahren zur Rahmensynchronisierung eines Zeitmultiplexsystems zu entnehmen, bei dem bezüglich eines Synchronisierungserkennungssignals die Zähler entsprechen zurückgesetzt werden und eine Synchronisation erreicht wird. Auch die Verwendung eines Synchronisationswortes, bestehend aus mehreren Low- und High-Pegeln.

Des weiteren sind taktrückgewinnbare Codierungsverfahren, bspw. das Manchesterverfahren, bekannt.

Eine andere Möglichkeit, in der Zentraleinheit und in den peripheren Modulen dieselbe Taktfrequenz zu gewährleisten, besteht darin, die peripheren Module über eine zusätzliche Taktleitung mit der Zentraleinheit zu verbinden. Insbesondere bei dezentralen Sicherheitssystemen für Kraftfahrzeuge, bei denen ein zentrales Steuergerät mit einer Vielzahl von dezentralen oder peripheren Modulen Daten austauschen muß, ist die Gewährleistung eines gemeinsamen synchronen Systemtaktes mit derartigen zusätzlichen Taktleitungen äußerst aufwendig.

Außerdem steigt mit dem Bedürfnis nach mehr Sicherheit in Kraftfahrzeugen neben einem Fahrerairbag, einem Beifahrerairbag, Gurtstraffern, Überrollbügeln weitere Schutzeinrichtungen wie beispielsweise Seitenairbags und dergleichen gewünscht werden, auch die Anzahl der peripheren Module, also die Anzahl der Endstufen zur Auslösung der einzelnen Sicherheitseinrichtungen deutlich an. Somit erhöht sich bei bekannten Bussystemen entweder die Anzahl der hoch genau arbeitenden, teuren Taktsignalgeneratoren, oder die Montage des Systems wird infolge der Verlegung der gesonderten Taktleitung immer aufwendiger.

Davon ausgehend liegt der Erfindung die Aufgabe zugrunde, ein Verfahren zum Übertragen von digitalen Daten bereitzustellen, das es insbesondere ermöglicht, daß die peripheren Module eines Systems zumindest beim Datenaustausch mit einem von der Zentraleinheit erzeugten Systemtakt arbeiten, ohne daß aufwendige gerätetechnische Maßnahmen erforderlich sind.

Diese Aufgabe wird durch das Verfahren nach Anspruch 1 sowie durch das Steuersystem nach Anspruch 40 gelöst. Vorteilhafte Weiterbildungen der Erfindung sind den unteransprüchen zu entnehmen.

Erfindungsgemäß wird gemäß Patentanspruch 1 beim einem Datenaustausch zusammen mit den zu übertragenden digitalen Daten auch eine Synchronisationsimpulsfolge, bestehend aus wenigstens einem Synchronisationsimpuls, übertragen, aus der empfangsseitig sowohl der Synchronisationszeitpunkt als auch eine den Sendetakt enthaltende Taktfrequenzinformation ermittelt wird. Aus dieser Taktfrequenzinformation wird dann ein mit dem Sendetakt synchroner Datenübernahmetakt abgeleitet, indem ein in seiner Taktfrequenz steuerbarer Datenübernahmetaktgenerator entsprechend angepaßt wird. Auf diese weise läßt es sich erreichen, daß zumindest empfangsseitig auf präzise, über lange Zeit stabil arbeitende Oszillatoren oder auf eine zusätzliche Taktleitung verzichtet werden kann.

Da die Synchronisation der peripheren Systemtakterzeugungsschaltung mit dem Sendetakt bei jeder Datenübertragung durchgeführt wird, kann ein relativ einfacher Oszillator, z. B. ein RC-Oszillator mit einem Widerstand und einer Kapazität, verwendet werden, da dessen temperatur- und alterungsabhängige Änderungen der Schwingungsfrequenz bei jedem Empfang ausgeglichen werden. Erhöht sich beispielsweise aufgrund der Geräteerwärmung die Taktrate des Oszillators, so wird mit dieser erhöhten Taktrate einerseits die Taktfrequenzinformation aufgenommen, andererseits auch der Datenübernahmetakt erzeugt, so daß es real zu keiner nennenswerten Abweichung kommt.

Ein weiterer, besonders überraschender Vorteil des erfindungsgemäßen Verfahrens zum Übertragen von digitalen Daten besteht darin, daß die Zentraleinheit die zu übertragenden Daten mit unterschiedlichen Sendetakten senden kann. Insbesondere in Sicherheitssystemen wird es somit ermöglicht, Auslöseinformationen zum Aktivieren der einzelnen Sicherheitseinrichtungen bspw. mit einem schnellen Sendetakt zu übertragen, während bspw. Selbsttestinformationen mit einem relativ langsamen Sendetakt ausgetauscht werden können. Hierdurch läßt sich die Informationsübertragung und -verarbeitung beim Überwachen der peripheren Module vereinfachen, ohne daß die Auslösegeschwindigkeit der Sicherheitseinrichtungen beeinträchtigt wird.

Besonders vorteilhaft ist es gemäß Patentanspruch 2, wenn aus der Zeitdauer wenigstens eines Synchronisationsimpulses die Taktfrequenz des Datenübernahmetaktes abgeleitet wird. Durch Ermittlung der Zeitdauer des Synchronisationsimpulses kann in einfacher weise, für die Frequenz aus der Zeitdauer quasi über das Reziproke, auf die Taktfrequenzinformation geschlossen werden. Dabei kann, wie im folgenden Patentanspruch 3 als besonders vorteilhaft herausgestellt, die Zeitdauer des Synchronisationsimpulses jeweils mit der Dauer eines Daten-Impulses übereinstimmen, so daß die einfachste Form eines Datenübernahmetaktes direkt aus der Zeitdauer des Synchronisationsimpulses abgeleitet werden kann, da der Datenübernahmetaktabstand genau der Zeitdauer entspricht. Jedoch sind generell auch andere Möglichkeiten zur Ableitung denkbar, bspw. ein ganzzahliges Vielfaches oder ein ganzzahliger Teiler der Zeitdauer sowie die Subtraktion bestimmter Werte. Damit wird durch einfachste Maßnahmen eine Anpassung auf bestimmte Einzelfälle möglich, ohne vom erfinderischen Grundprinzip abzuweichen.

Wenn bspw. die Synchronisationsimpulse entsprechend einem zu übertragenden Daten-Impuls aufgebaut sind, können diese in der gleichen Weise erzeugt werden, wie die zu übertragenden Daten, so daß keine besonderen Einrichtungen zur Übertragung der Sendetaktinformationen erforderlich sind. Insbesondere lassen sich die Synchronisationsimpulse ähnlich einem Datenwort als Synchronisierungswort speichern. Wie ein zur Informationsübertragung dienendes Datenwort läßt sich also das Synchronisationswort aus einem Speicher abrufen und senden. Die Daten-Impulse werden gemäß Patentanspruch 5 dabei vorzugsweise in Form von Datenwörtern mit vorbestimmter Impuls- bzw. Bitanzahl zusammengefaßt. Ein Impuls kann dabei genau zwei binäre Zustände annehmen es ist also sowohl ein High- als auch ein Low-Zustand zulässig. Um die Zeitdauer des Synchronisationsimpulses zu erfassen, sind entsprechende Pegelwechsel vorzusehen, gemäß Patentanspruch 4 vorzugsweise eine Abfolge mehrerer Synchronisationsimpulse mit alternierendem Pegel.

Die Datenübertragung kann durch eine Totzeit nach jedem Datenwort unterbrochen werden, wobei die Länge der Totzeit vorzugsweise größer als die Länge eines Datenwortes gewählt wird. Es werden nur dann Daten übertragen, falls Bedarf dafür vorhanden ist. Außerdem läßt sich nach einer Totzeit der nächste Pegelwechsel sofort als Synchronisationsimpuls erkennen, was sich gemäß Patentanspruch 8 vorteilhaft anschließt. Wird keine Totzeit vorgesehen, kann durch Abzählen der bereits übertragenen Daten-Impulse innerhalb des Datenwortes das Ende des Datenwortes und der Anfang des nächsten Synchronisationsimpulses bestimmt werden.

Das erfindungsgemäße verfahren ist auch für pulsweitenmodulierte (PWM)-Signale anwendbar, da sich bei denen in gleicher Weise ausbeinem Synchronisationsimpuls die Taktfrequenzinformation ableiten läßt, indem diese wiederum die Zeitdauer des Synchronisationsimpulses diese enthält. Aufgrund der Anforderungen an die Rückgewinnung der Taktzeitpunkte müssen jeweils Pegelwechsel zwischen den den einzelnen PWM-Worten vorgesehen werden. Dies erfolgt vorzugsweise in dem die Information über die Dauer des Anliegens eines ersten Signalpegels innerhalb eines festen Impulsrahmens kodiert ist, wobei der erste Pegel zumindest für eine kurze Zeitdauer anliegt. Am Ende eines PWM-Wortes nimmt das Signal zumindest für eine definierte Zeitdauer den zweiten Signalpegel an, wodurch jeweils zu Beginn des nächsten PWM-Datenwortes ein Pegelwechsel erfolgt. Das PWM-Datenwort kann dabei in der Länge des Anliegens des ersten Signalpegels mehr als zwei logische Pegel kodieren, bspw. acht verschiedene Längen aufweisen, die binär einer 3 Bit-Information entsprechen ($2^3$=8).

Um nun auf einfache Weise die Frequenzinformation des Sychronisierungsimpulses zu erfassen, wird die Zeitdauer der einzelnen Sychronisierungsimpulse mit einer empfangsseitig erzeugten Oszillatorfrequenz verglichen wird, so daß die Zeitdauer der Impulse als Zählwert der Anzahl der Oszillatortakte während eines Synchronisierungsimpulses festgehalten wird. Um den durch die Quantisierung entstehenden Fehler möglich gering zu halten, muß die Oszillatorfrequenz gemäß dem Patentanspruch 10 deutlich größer, vorzugsweise ein Vielfaches, der Impulsdauer sein. So ist bei einer 10fach höheren Oszillatorfrequenz der Fehler ±10%, bei einer 100fach höheren ±1%. Aus dem ermittelten Zählwert kann entweder direkt (durch Gleichsetzung) oder indirekt (durch Subtraktion und/oder Teilung) der aktuelle Wert des Abstandes zum nachfolgenden Systemtakt abgeleitet werden, je nach dem, ob der Synchronisationsimpuls in seiner Länge mit einem Daten-Impuls übereinstimmt oder nicht. Die Patentansprüche 11 bis 13 beschreiben besonders vorteilhafte Weiterbildungen, bei denen durch mehrfache Erfassung und/oder Vergleich mit einem zulässigen Wertebereich die Gefahr von Erkennungsfehlern reduziert wird.

Die Lehre der Patentansprüche 13 und 20, daß der Hilfswert jeweils die Hälfte, vorzugsweise ein Viertel des im Normalbetrieb üblichen wertebereichs ist, hat den besonderen Vorteil, daß die Empfangsseite sehr schnell wieder zum Empfang neuer Daten bereit ist und bevorzugt auf eine sendeseitig vereinbarte Notfallfrequenz zur beschleunigten Datenübertragung angepaßt wird, unabhängig, ob ein entsprechender Synchronisationsimpuls erkannt wurde. Die Erkennung eines Notfallsignals bleibt so immer sichergestellt.

Patentanspruch 14 lehrt basierend auf dem ermittelten aktuellen Wert des Systemtaktabstandes die Erzeugung des Systemtaktes durch das Überlaufzählerprinzip, indem spätestens mit Beginn des ersten Daten-Impulses ein Systemtakt erzeugt wird und die die Anzahl der Oszillatortakte von neuem gezählt wird, bis der aktuelle Wert des Systemtaktabstandes erreicht ist, dann erneut ein Systemtakt erzeugt und die Zählung der Oszillatortakte von neuem begonnen wird.

Der besondere Vorteil des Grundkonzeptes der Erfindung wird hierbei deutlich, da sowohl die Erfassung der Taktfrequenzinformation als auch die Erzeugung des Systemtaktes in zyklischem Abgleich immer wieder auf die gleiche Oszillatortakte zurückgreifen. Erhöht sich also die Taktfrequenz des empfangsseitigen, einfachen Oszillators aufgrund der Erhitzung der Bauelemente, alterungsbedingter Erscheinungen oder ähnlichem, so weicht zwar nominell der Zählwert der Oszillatortakte ab, die reale Abweichung des Systemtaktes ist jedoch auf reine Quantisierungsfehler begrenzt. Außerdem ist durch die Übergabe der Taktfrequenzinformation mit jedem Synchronisationsimpuls die Anpassung der Sendetaktfrequenz möglich, da in dem Falle sich einzig der Zählwert der Oszillatortakte während des Synchronisationsimpulses erhöht oder erniedrigt und entsprechend auch die Systemtakterzeugung nominell beschleunigt oder verlangsamt wird. Der auch hierbei möglicherweise auftretende Quantisierungsfehler ist bei entsprechender Wahl der Oszillatorfrequenz unwesentlich. Der Vorteil ist demgegenüber die mittels der zählerschleifen besonders einfachen Realisierung.

Sollen nun die Daten pulsweitenmoduliert übertragen werden, so läßt sich das beschriebene erfinderische Grundprinzip gemäß Patentanspruch 17 äquivalent anwenden, in dem wiederum die Zeitdauer des Synchronisierungsimpulses über die Anzahl der Oszillatortakte erfaßt und und daraus der Datenübernahmetakt abgeleitet wird. Da jedoch innerhalb eines PWM-Datenwortes nun innerhalb eines Impulsrahmens mehrere Pulsdauerpegellängen möglich sind, muß entsprechend häufiger abgetastet werden, so daß der Zählwert der Oszillatortakte zunächst nur den aktuellen Wert der Impulsrahmentaktbreite angibt. Wiederum wird ein Systemtakt, in dem Fall der Impulsrahmentakt erzeugt, indem zumindest synchron mit dem ersten Datenwort die Anzahl der Oszillatortakte gezählt und bei Erreichen des aktuellen Wertes der Impulsrahmenbreite der nächste Impulsrahmentakt erzeugt wird.

Gemäß Patentanspruch 19 können aber bei der PWM die folgenden Datenworte ohne Synchronisationsimpulse auskommen, indem auch die Zeitdauer des aktuellen Datenwortes bestimmt wird, da die PWM jeweils zwingend einen definierten Pegelwechsel zu Beginn eines jeden Datenwortes vorschreibt. So wird gegebenenfalls der aktuelle Wert der Impulsrahmenbreite immer entsprechend der vorherigen Datenwortbreite bzw. des dabei ermittelten Zählerwertes (insb. bei Schwankungen der Oszillatorfrequenz) angepaßt, falls der ermittelte Wert in einem zulässigen Wertebereich liegt. Das mit einer Frequenzänderung behaftete Datenwort ist dabei einem Synchronisierungsimpuls gleichzusetzen. Für bestimmte Fälle kann der Verlust der Daten-Information nicht vermieden, jedoch sendeseitig bereits berücksichtigt werden, indem eine unkritische Information während der Frequenzänderung gesandt wird.

Gemäß Patentanspruch 21 wird nun der Datenübernahmetakt phasenversetzt zum Systemtakt erzeugt, indem ein Datenübernahmetaktzähler auf einen wert kleiner als der aktuelle Wert des Systemtaktabstandes gesetzt wird und die Zählung der Oszillatortakte nach dem Überlauf erst bei Erreichen des nächsten Systemtaktes begonnen wird.

Besonders vorteilhaft ist dabei gemäß Patentanspruch 22 die Abtastung in der Mitte des Daten-Impulses, indem das Überlaufende des Datenübernahmetaktes auf das Nächstganzzahlige der Hälfte des aktuellen Wertes des Systemtaktstandes gesetzt wird, da in der Mitte des Daten-Impulses der Einfluß der Signaldämpfung am schwächsten und der Signalpegel am deutlichsten ist. Generell sind aber auch andere Abtastzeitpunkte Innerhalb des Daten-Impulses durch entsprechend andere Werte des Überlaufendes realisierbar.

Ein alternatives, noch vorteilhafteres Verfahren zur Abtastung wird durch die Patentansprüche 23 bis 28 beschrieben. Es nutzt besonderer Weise den für die bereits beschriebenen Verfahren der Erfassung der Taktfrequenzinformation und Systemtakterzeugung erforderlichen hohen Oszillatortakt zu einer Überabtastung des Pegels innerhalb eines Zeitfensters.

So definiert der Patentanspruch 23 zunächst ein Abtastzeitfenster bestehend aus einer zeitlichen Differenz zum Anfang des Daten-Impulses sowie einer sich daran anschließenden Abtastzeitspanne, die natürlich kürzer als der Systemtaktabstand ist.

Soll innerhalb des Abtastzeitfensters eine Überabtastung des Pegels erfolgen, so ist die Abtastzeitspanne als ein Vielfaches der Oszillatorschwingungsdauer zu wählen. Dies ist aber aufgrund der bereits beschriebenen, erforderlichen hohen Oszillatorfrequenz auch jederzeit gewährbar. Gemäß der Ansprüche 25 und 26 ist dabei eine Abtastspanne von ca. 50 % und eine Verzögerungszeit von 25 % des Systemtaktabstandes bevorzugt, wodurch das Abtastzeitfenster in der Mitte des Daten-Impulses liegt und somit neben unsauberen Flankenanstiegen bei Pegelwechseln, beispielsweise aufgrund der Dämpfung der hochfrequenten Anteile, auch Störimpulse, bspw. des Versorgungsspannungsnetzes keinen Einfluß auf die Pegelerkennung haben.

Die Überabtastung innerhalb des Zeitfensters erfolgt nunmehr gemäß Patentanspruch 27 vorzugsweise durch konjunktive Verknüpfung des Daten-Impulspegels mit den Oszillatortakte über die Dauer der Abtastzeitspanne hinweg. Die Überabtastung innerhalb eines Zeitfensters ist auch besonders deshalb vorteilhaft, weil es sich auf noch näher darzustellende Weise äußerst einfach zur Erfassung der PWM-Datenwortinformation eignet.

Als erstes Verfahren zur Abtastung der PWM-werte bietet sich die Erzeugung des Datenübernahmetaktes aus dem Impulsrahmentakt an.

Dazu ist das erfindungsgemäße Grundkonzept gemäß Patentanspruch 29 derart weiterzuentwickeln, das zunächst von der aktuellen Impulsrahmenbreite die Fixpegelzeitdauern abgezogen werden und dann durch die Anzahl der Daten-Impulse innerhalb des PWM-Wortes geteilt wird. Die Erzeugung des Datenübernahmetaktes erfolgt dann wieder phasenverschoben, vorzugsweise mittig im Daten-Impuls, indem zunächst mit einer Verzögerungszeit vom Impulsrahmentakt. die sich aus der ersten Fixpegeldauer und der gewünschten Lage im Daten-Impuls abhängt, 50 % bei der bevorzugten mittigen Abtastung, ein Datenübernahmetakt erzeugt und dies mittels eines Überlaufzählers entsprechend der aktuell ermittelten Zeitdauer eines Daten-Impulses wiederholt wird.

Besonders herzuheben ist dabei, daß letztlich das gleiche Grundrezept zum Einsatz (erster Zähler für Phasenverschiebung, zweiter Zähler als Impulsgeber) kommt, so daß durch einfache hardwaremäßige Anpassungen alle möglichen Signalformen verarbeitet werden können. So kann auch das besonders bevorzugte Verfahren der Überabtastung des Signalpegels innerhalb eines Zeitfensters gemäß der Patentansprüche 34 bis 39 für PWM-Datenworte angewandt werden. Beispielsweise wird wiederum nach der ersten Fixpegelzeitdauer zunächst in einem ersten Zähler die gewünschte Phasenverschiebung erzeugt und in einem zweiten Zähler der bis zum ermittelten Wert der Daten-Impulsbreite läuft, mittels eines Schwellwertes die Abtastzeitspanne Ta ermittelt und beim Überlauf des zweiten Zählers dieser rückgesetzt. Während der Abtastzeitspanne wird wieder der Signalpegel konjunktiv auf dem Oszillatortakt verknüpft und die Anzahl der Abtastimpulse abgezählt sowie der Zählwert dann mit dem entsprechenden Schwellwert verglichen.

In besonderer weise eignet sich aber eine dritte Weiterbildung gemäß des Patentspruches 40 zur Abtastung des PWM-Wortes, indem die Überabtastung nicht auf ein bitweises Zeitfensters sondern auf ein Zeitfenster über die gesamte Zeitdauer eines PWM-Datenwortes hinweg bezogen wird.

Dabei wird ausgehend vom Impulsrahmentakt nach einer zeitlichen Differenz, die beispielsweise gleich der ersten Fix-Pegelzeitdauer ist, für eine PWM-Abtastzeitspanne lang jeder Oszillatortakt konjunktiv mit dem anliegenden Signalpegel verglichen und die Anzahl der Abtastimpulse gezählt. Zur Auswertung wird der Abtastzählerwert hierbei jedoch mit einer Anzahl von Schwellen verglichen, die vorzugsweise als Mittelwerte zwischen den Sollwerten der möglichen Pegel definiert sind. Dieses Verfahren ist besonders einfach zu realisieren, da es direkt an den Impulsrahmentakt anknüpft und sich mit den gleichen Bauelementen realisieren läßt.

Der Patentanspruch 40 lehrt den grundlegenden Aufbau eines Steuersystems zur Durchführung des Verfahrens. Wie bereits oben im Zusammenhang mit den Verfahren erläutert wurde, ist eine Taktfrequenzinformationserfassungsschaltung vorhanden, welche von einem Oszillator getaktet wird. Mit dem Takt des Oszillators wird die Taktfrequenzinformation erfaßt. Diese Taktfrequenzinformation wird dann an einen in seiner Taktfrequenz veränderbaren Datenübernahmetaktgenerator weitergeleitet, der wiederum getaktet vom gleichen Oszillator, einen Datenübernahmetakt erzeugt. Durch die doppelte Bezugnahme auf den Takt des Oszilltors werden Fehler durch den Wechsel oder das Abweichen der Taktfrequenz des Oszillators nahezu vollständig eliminiert. Die Ansprüche an die Langzeittaktgenauigkeit des Oszillators sind dabei bereits durch einfache RC-Oszillatoren zu erfüllen. Der sendeseitige Wechsel der Taktfrequenz mittels der Taktfrequenzinformation sowie die Anpassung bei Abweichungen der Oszillatorfrequenz erfolgen empfangsseitig quasi identisch.

Der folgende Patentanspruch 41 lehrt eine bevorzugte Weiterbildung des Steuersystems, indem digital in Form von Zählwerten zunächst die Zeitdauer des Synchronisierungsimpulses als Taktfrequenzinformation erfaßt wird und der Zählwert an den Datenübernahmetaktgenerator weitergeleitet wird, der seinerseits wieder zumindest einen Zähler aufweist, der die Anzahl der Oszillatortakte abzählt und bei Erreichen des Zählwertes nach dem Prinzip eines Überlaufzählersjeweils einen Datenübernahmetakt erzeugt.

Der Patentanspruch 42 zeigt eine besonders bevorzugte Weiterbildung des Steuersystems, bei der die Erfassung der Taktfrequenzinformation sowie die Erzeugung des System- und Datenübernahmetaktes komplett durch das digitale Grundkonzept aus Zählern, Vergleichern und Speichern für die Überlaufschwellwerte umgesetzt ist und daher besonders einfach hard- als auch softwaretechnisch realisiert werden kann.

So weist jedes Modul einen ersten Speicher auf, in dem der von der Taktfrequenzinformationserfassungsschaltung ermittelte Zählwert jeweils abgespeichert wird und mit dem ein zweiter Speicher über ein erstes Numerikglied verbunden ist, wobei das Numerikglied auf einen bestimmten Teiler und/oder Subtrahend vom Speicherwert des ersten Speichers programmiert wird und den entsprechenden Wert im zweiten Speicher ablegt, analog dazu mit dem ersten Speicher ein dritter Speicher über ein zweites Numerikglied verbunden ist, wobei auch dieses Numerikglied auf einen bestimmten Teiler und/oder Subtrahend vom Speicherwert des ersten Speicher programmiert wird und den entsprechenden Wert nun im dritten Speicher ablegt. Ein erster Zähler, getaktet vom gleichen Oszillator wie die Taktfrequenzinformationsschaltung, zählt die Anzahl der Oszillatortakte und gibt den Zählwert jeweils an eine Vergleichsschaltung, welche den Zählwert mit dem Speicherwert des ersten Zählers vergleicht und beim Erreichen des Speicherwerts einen Systemtakt erzeugt. Der Zählwert des ersten Zählers wird des weiteren auch von einer zweiten Vergleichsschaltung mit dem im zweiten Speicher abgelegten Speicherwert verglichen und beim Erreichen des Speicherwertes ein Impuls an den Set-Eingang eines Abtastfenster-Flip-Flops gesendet wird. Rückgesetzt vom Impuls der zweiten Vergleichsschaltung zählt ein zweiter, ebenfalls vom gleichen Oszillator getakteter Zähler die Anzahl der Oszillatortakte und eine dritte Vergleichsschaltung vergleicht den Zählwert des zweiten Zählers mit dem Speicherwert des dritten Speichers und sendet bei Erreichen des Speicherwertes einen Impuls an den Reset-Eingang des Abtastfenster-Flip-Flops. Dieses sendet für die Zeitdauer zwischen dem Impuls am Set- und dem am Reset-Eingang einen Ausgangsimpuls entsprechender Breite an eine Datenübernahmeschaltung und verknüpft für diese Zeitdauer das übertragene Signal konjunktiv mit dem Oszillatortakt. Sie weist einen Zähler auf, der die Anzahl der Oszillatortakte zählt, bei denen ein bestimmter Datenpegel anlag, und der Zählwert dann in einem Komparator mit mindestens einer Schwelle verglichen und daraus der Datenpegel abgeleitet wird.

Durch die Anpassung der Numerikglieder sowie des Pegelkomparators lassen sich mit dieser Anordnung sowohl digitale binäre Daten als auch pulsweitenmodulierte erfassen. Es wird dabei bei der Erfassung der Taktfrequenzinformation, bei der Erzeugung des System- und Datenübernahmetaktes als auch bei der Abtastung des Signalpegels auf den gleichen, gegenüber der Taktfrequenz höheren Oszillatortakt zurückgegriffen. Die Erzeugung des Abtastfensters und Überabtastung innerhalb dieses Zeitfensters ist besonders geeignet, kurze hochfrequente Störungen zu eliminieren und läßt sich überraschend einfach aus dem Oszillatortakt ableiten.

Die Erfindung wird im folgenden anhand von Zeichnungen und Ausführungsbeispielen näher erläutert. Es zeigen:

Fig. 1     ein vereinfachtes schematisches Blockschaltbild eines Steuersystems,

Fig. 2     ein vereinfachtes schematisches Blockschaltbild eines ersten Ausführungsbeispiels des Taktgenerators für das Steuersystem nach Fig. 1,

Fig. 3     Impulsdiagramm zu Fig. 2, welches den zeitlichen Verlauf der verschiedenen Größen visualisiert,

Fig. 4     ein vereinfachtes schematisches Blockschaltbild eines weiteren Ausführungsbeispiels eines Taktgenerators,

Fig. 5     ein vereinfachtes Blockschaltbild eines weiteren Ausführungsbeispiels eines Takt-Generators und eines Datenübernahmeschaltkreises der Steuermodule des Steuerungssystems gemäß Fig. 1,

Fig. 6     ein Impulsdiagramm zur Erläuterung der Funktion des Takt-Generators und des Datenübernahmeschaltkreises gemäß Fig. 6

Fig. 7     ein Impulsdiagramm zur Erläuterung der Funktion des Takt-Generators gemäß Fig. 2 bei Übertragung von pulsweitenmodulierten Signalen,

Fig. 8     ein Impulsdiagramm zur Darstellung der Anpassung der empfangsseitigen Taktfrequenz eines Takt-Generators gemäß Fig. 5 auf leichtes Schwanken der Sendefrequenz

Fig. 9     ein Impulsdiagramm zur Darstellung der Anpassung der empfangsseitigen Taktfrequenz eines Takt-Generators gemäß Fig. 5 auf Verdopplung und nachfolgende Halbierung der Sendefrequenz

Fig. 10     Überabtastung eines gestörten binären digitalen Signals innerhalb des Abtastzeitfensters

Fig. 11     Inkrementierung des Pegelwert-Zählers und Ableitung des Pegelwerts durch Schwellwertvergleich zu Fig. 10

Fig. 12     Überabtastung eines gestörten pulsweitenmodulierten digitalen Signals innerhalb des Abtastzeitfensters

Fig. 13     Inkrementierung des Pegelwert-Zählers und Ableitung des Pegelwerts durch Schwellwertvergleich zu Fig. 12

Fig. 14     Datenübernahme bei ungestörter Erkennung der Taktfrequenzinformation und bei gestörter mittels gespeicherter Hilfsabtastfrequenz im Normalbetrieb

Fig. 15     Datenübernahme im Notfallbetrieb, Frequenz entspricht der Hilfsabtastfrequenz sende- und empfangsseitig

In den verschiedenen Figuren sind einander entsprechende Bauteile eines Ausführungsbeispiels sowie in den Impulsdiagrammen die Darstellung des zeitlichen Ablaufs der betreffenden Größe mit gleichen Bezugszeichen versehen, bei wirkungsgleichen Bauteilen verschiedener Ausführungsbeispiele ist bevorzugt nur eine für das Ausführungsbeispiel stehende Ziffer vorangestellt.

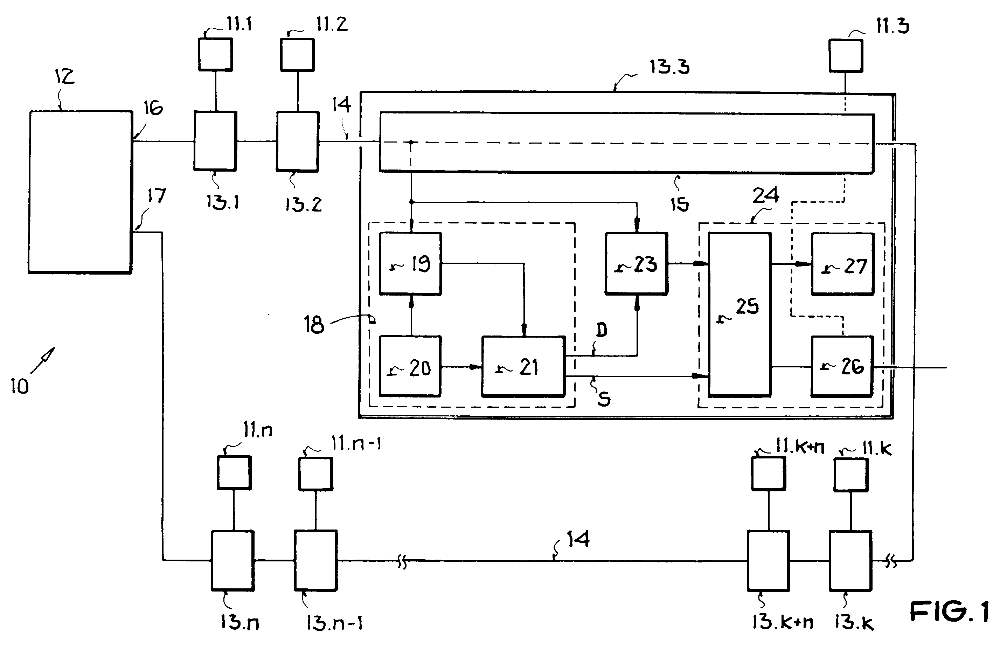

Das in Fig. 1 schematisch dargestellte Steuersystem 10 umfaßt eine Zentraleinheit 12 mit einem ersten Eingangs/Augangs-Anschluß 16 und einem zweiten Eingangs/Ausgangs-Anschluß 17. An die beiden Eingangs/Ausgangs-Anschlüsse sind über eine ringförmige Busleitung 14 periphere Module 13 so angeschlossen, daß das erste periphere Modul $13_1$ mit dem ersten Eingangs/Ausgangs-Anschluß 16 und das n-te Modul $13_n$ mit dem zweiten Eingangs/Ausgangs-Anschluß 17 verbunden ist, während die übrigen peripheren Module 13 über die Busleitung 14 jeweils mit dem vorhergehenden und dem nachfolgenden peripheren Modul verbunden sind.

Mittels der peripheren Module $13_i$ wird jeweils ein zugeordneter Aktuator $11_i$ angesteuert, z.B. Auslöse-

einrichtungen für Schutzeinrichtungen an einem Fahrzeug wie Airbags, Gurtstrammer, das Aufklappen von Überrollbügeln und dergleichen oder Stellglieder für eine individuelle Steuerung des Bremsdruckes an einzelnen Fahrzeugrädern im Sinne einer Antiblockierregelung oder einer Fahrdynamik-Regelung und/ oder der Steuerung des Dämpfungsverhaltens elektrohydraulischer Dämpfungs-Elemente eines aktiven Fahrwerks. Das Steuersystem umfaßt eine Zentraleinheit 12, die aus einer Verarbeitung der Ausgangssignale nicht dargestellter Sensoren für das dynamische Verhalten des Fahrzeuges charakteristische - digitale - Ausgangssignale erzeugt, sowie den Aktuatoren 11 einzeln zugeordnete, periphere Steuermodule 13, die durch ein Bus-System, das in der Fig. 1 durch Bus-Leitungen 14 repräsentiert ist, kommunikationsfähig mit der Zentraleinheit 12 verbunden sind und aus einer Verarbeitung von Informationsdaten, die von der Zentraleinheit 12 empfangen werden, die für die Ansteuerung der Aktuatoren 11 erforderlichen Steuer-Ausgangssignale erzeugen.

Bei dem Ausführungsbeispiel ist das Bussystem als Ringbussystem ausgebildet, bei dem die Module $13_i$ gleichsam in Reihe zwischen zwei Daten-Ausgabe- und -Empfangs-Anschlüsse 16 und 17 der Zentraleinheit 12 geschaltet sind, die an jedem dieser Anschlüsse 16 und 17 Daten aussenden und Daten, z.B. Selbsttest- oder Statusdaten, die von den peripheren Modulen 13 ausgesandt werden, empfangen kann.

Es versteht sich, daß auch eine, der Einfachheit halber nicht eigens dargestellte, Ausbildung des Bussystems als Stichleitungssystem (Sternbus) möglich ist, wenn die Daten-Ausgabe- und Empfangsanschlüsse 16 und 17 der Module 13 bidirektional ausgelegt sind.

Wie Fig. 1 zeigt, umfaßt beispielsweise das periphere Modul $13_3$ eine mit der Busleitung 14 verbundene Sende/Empfangs-Einrichtung 15, die mit einem Taktgenerator 18 und einem Datenübernahmeschaltkreis 23 verbunden ist, um von der Zentraleinheit 12 gesendete digitale Daten erfassen und einer Funktionseinheit 24 des peripheren Moduls 13.3 zuführen zu können.

Die Funktionseinheit 24 umfaßt einen Steuerschaltkreis 25, der beispielsweise als Mikroprozessor oder dergleichen ausgebildet sein kann, einen mit dem Steuerschaltkreis 25 verbundenen Ausgangsschaltkreis 26, der beispielsweise in einem Sicherheitssystem ein Auslöseschaltkreis für eine Personen schützende Einrichtung sein kann, sowie einen Datenübergabeschaltkreis 27, über den vom Steuerschaltkreis 25 zur Zentraleinheit 12 zu sendende Daten an die Sende/Empfangs-Einrichtung 15 weitergeleitet werden.

Wie in Fig. 1 durch gestrichelte Linien innerhalb der Sende/Empfangs-Einrichtung 15 dargestellt, können der Taktgenerator 18, der Datenübernahmeschaltkreis 23 und der Datenübergabeschaltkreis 27 auch unmittelbar mit der Busleitung 14 verbunden sein.

Der Taktgenerator 18 umfaßt eine Taktfrequenzinformationserfassungsschaltung 19, die eingangsseitig mit der Sende/ Empfangs-Einrichtung 15 oder unmittelbar mit der Busleitung 14 verbunden ist, einen Oszillator 20, vorzugsweise einen RC-Oszillator, also einen Oszillator, der einen aus einem Widerstand und einem Kondensator aufgebauten Schwingkreis aufweist, sowie einen Datenübernahme - Taktgenerator 21, der einen Systemtakt S an die Funktionseinheit 24 und einen Datenübernahmetakt D an den Datenübernahmeschaltkreis 23 liefert.

Für das erfinderische Grundkonzept ist dabei von entscheidender Bedeutung, daß sowohl die Taktfrequenzinformationserfassungsschaltung 19 als auch der Datenübernahme - Taktgenerator 21 auf ein und den selben Oszillator 20 zugreifen, da genau dadurch die Abweichung der Oszillatorfrequenz keine Auswirkungen auf die Systemtaktfrequenz hat. Dies geschieht dadurch, daß die Taktfrequenzinformationserfassungsschaltung 19 mit Hilfe des Oszillators 20 die Taktfrequenzinformation erfaßt. Der dabei gegenüber einem normierten Sollwert ggfs. auftretende Fehler durch instabiles Oszillatorverhalten wird daduch kompensiert, daß mit dem gleichen, fehlerbehafteten Oszillatortakt auch die Datenübernahmetaktfrequenz erzeugt wird.

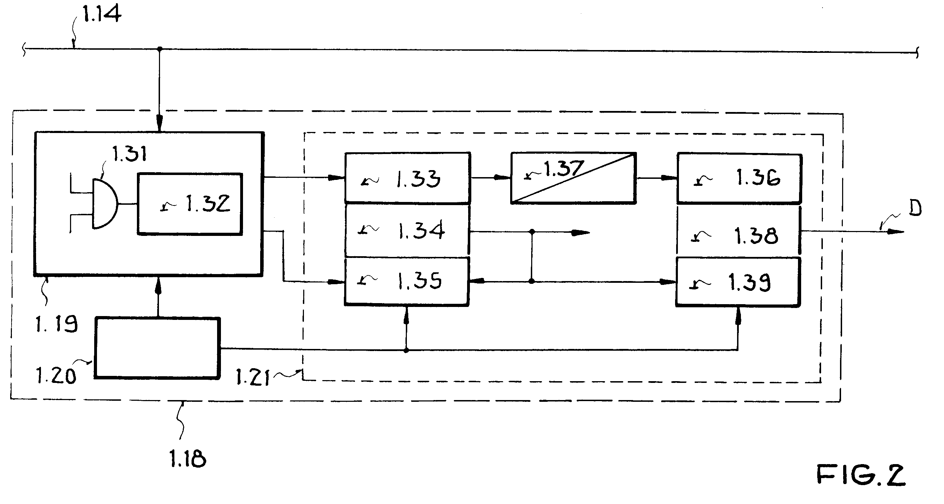

Wie in Figur 2 rein schematisch dargestellt, umfaßt die Taktfrequenzinformationserfassungsschaltung 1.19 eine Torschaltung 1.31, die beispielsweise als UND-Gatter ausgebildet sein kann und der einerseits eine von der Zentraleinheit für die Busleitung 1.14 gesendete, den Sendetakt anzeigende Synchronisierungs-Impulsfolge (SW) und andererseits das vom Oszillator 1.20 erzeugte Oszillatortaktsignal zugeführt ist. Ausgangsseitig ist die Torschaltung 1.31 mit einem Taktfrequenzinformationszähler (TFI-Zähler) 1.32 verbunden.

Der Datenübernahme - Taktgenerator 1.21 umfaßt ein einen Bitdauer-$(T_B)$-Speicher 1.33 für einen von der Taktfrequenzinformationserfassungsschaltung ermittelten TFI-Zählwert. Dieser TFI-Zählwert entspricht der Anzahl von Oszillatortakte, die während der Dauer eines Synchronisierungsimpulses $(syn_i)$ gezählt wurden. Der TB-Speicher 1.33 ist mit einem $T_B$-Vergleicher 1.34 verbunden, der mit einem als $T_B$-Zähler 1.35 arbeitenden Schieberegister, das vom Oszillator 1.20 getaktet wird, verbunden ist. Ein Verzögerungszeit$(T_R)$-Vergleicher 1.36 ist über einen $T_R$-Teiler 1.37 mit dem $T_B$-Speicher 1.33 verbunden, um einen $T_R$-Zählwert, der beispielsweise der Hälfte des TFI-Zählwerts entspricht, zu speichern. Eine zweiter Vergleicher $(T_R$-Vergleicher) 1.38 ist einerseits mit dem $T_R$-Speicher 1.36 und andererseits mit einem als $T_R$-Zähler 1.39 arbeitenden Schieberegister verbunden, das vom Oszillator 1.20 getaktet ist. Der Ausgang des $T_B$-Vergleichers 1.34 ist mit den Rücksetzeingängen der beiden Zähler 1.35, 1.39 verbunden.

Der in Fig. 2 dargestellte Taktgenerator 1.18 arbeitet zur Durchführung des erfindungsgemäßen Verfahrens wie folgt:

Sobald die Taktfrequenzinformationserfassungsschaltung 1.19 von einer nicht näher dargestellten Totzeitschaltung freigegeben ist und die Zentraleinheit über die Busleitung 1.14 eine Synchronisierungsimpulsfolge (SW), im folgenden auch Synchronwort SW genannt, als den Sendetakt anzeigende Impulsfolge und ein Datenwort DW seriell sendet, beginnt der TFI-Zähler 1.32 beim Eintreffen des ersten Impulses High die Oszillatortakte des Oszillators 1.20 zu zählen. Der beim Abfallen des Impulses von High auf Low vorliegende Zählwert entspricht der Dauer des empfangenen Impulses bezogen auf die aktuelle Oszillatorfrequenz des Oszillators 1.20. Dieser Zählwert kann an den $T_B$-Speicher 1.33 übergeben werden, um daraus ein als Systemtakt S dienendes Taktsignal sowie einen Datenübernahmetakt D abzuleiten.

Vorzugsweise hat die Synchronisierungsimpulsfolge eine alternierende Pegelform, bspw. ein acht Bit umfassendes Synchronwort mit der Bitfolge 1-0-1-0-1-0-1-0 (H-L-H-L-H-L-H-L). Somit ist es möglich, die Dauer der einzelnen H-Impulse mehrfach zu erfassen und aus den einzelnen erfaßten Zählwerten einen gemittelten, und damit genaueren, die Impulsdauer anzeigenden Zählwert zu erhalten, der dann in dem $T_B$-Speicher 1.33 gespeichert wird. Sobald der Zählwert im $T_B$-Speicher 1.33 gespeichert ist, wird die Taktfrequenzinformationserfassungsschaltung 1.19 in diesem Ausführungsbeispiel von der Totzeitschaltung zumindest für die Dauer des nachfolgenden Datenworts DW oder einer fest vorgegebenen Anzahl von Datenworten DW gesperrt. Vorzugsweise wird jedoch die Taktfrequenzinformationserfassungsschaltung 1.19 über die Dauer des nachfolgenden Datenwortes DW bzw. der nachfolgenden Datenworte DW hinaus noch für eine Zeit $t_{tot}$ gesperrt, um eine störungsfreie Datenübernahme zu gewährleisten.

Der im $T_B$-Speicher 1.33 gespeicherte Zählwert wird von der $T_R$-Teiler 1.37 vorzugsweise durch 2 geteilt und im $T_R$-Speicher 1.36 gespeichert. Zur Erzeugung des Systemtakts S vergleicht der Vergleicher 1.34 den Inhalt des $T_R$-Zählers 1.35 mit dem $T_B$-Speicher 1.33 gespeicherten Zählwert. Sobald die vom $T_B$-Zähler 1.35 gezählte Anzahl der Oszillatortakte des Oszillators 1.20 mit dem im $T_B$-Speicher 1.33 gespeicherten Zählwert übereinstimmt, gibt die Vergleicher 1.34 ein Systemtaktsignal S an die Funktionseinheit 1.24 des peripheren Moduls aus. Das Systemtaktsignals wird dabei ebenfalls als Rücksetzsignal an die Zähler (1.35, 1.39) angelegt, so daß nach der Ausgabe des Systemtaktsignals S mit der Zählung der Oszillatortakte erneut begonnen wird.

Zur Erzeugung des zum Systemtakt S phasenverschobenen Datenübernahmetaktes D mittels des $T_R$-Vergleichers 1.38 vergleicht dieser die Anzahl der vom $T_R$-Zähler 1.39 gezählten Oszillatorschwingungen mit dem im $T_R$-Speicher 1.36 gespeicherten Zählwert. Da der im $T_R$-Speicher 1.36 gespeicherte Zählwert kleiner ist als der im $T_B$-Speicher 1.33 gespeicherte Zählwert wird dieser vom $T_R$-Zähler 1.39 bereits vor Ablauf, insbesondere nach der halben Dauer eines Bits erreicht, so daß der Vergleicher 1.38 etwa in der Mitte eines Bits ein Datenübernahmetaktsignal D ausgibt. Der $T_R$-Zähler 1.39 zählt dabei jedoch weiter und wird erst beim Auftreten des Systemtaktes S zurückgesetzt, der jeweils mit dem Anfang eines Bits im Datenwort DW zusammenfällt.

Der Datenübernahme - Taktgenerator 1.18 erzeugt dann solange einen Systemtakt S entsprechend dem bei der letzten Datenübertragung durch die Taktfrequenzinformation ermittelten Sendetakt der Zentraleinheit bis nach Freigabe der Taktfrequenzinformationserfassungsschaltung 1.19 eine weitere Datenübertragung von der Zentraleinheit erfolgt.

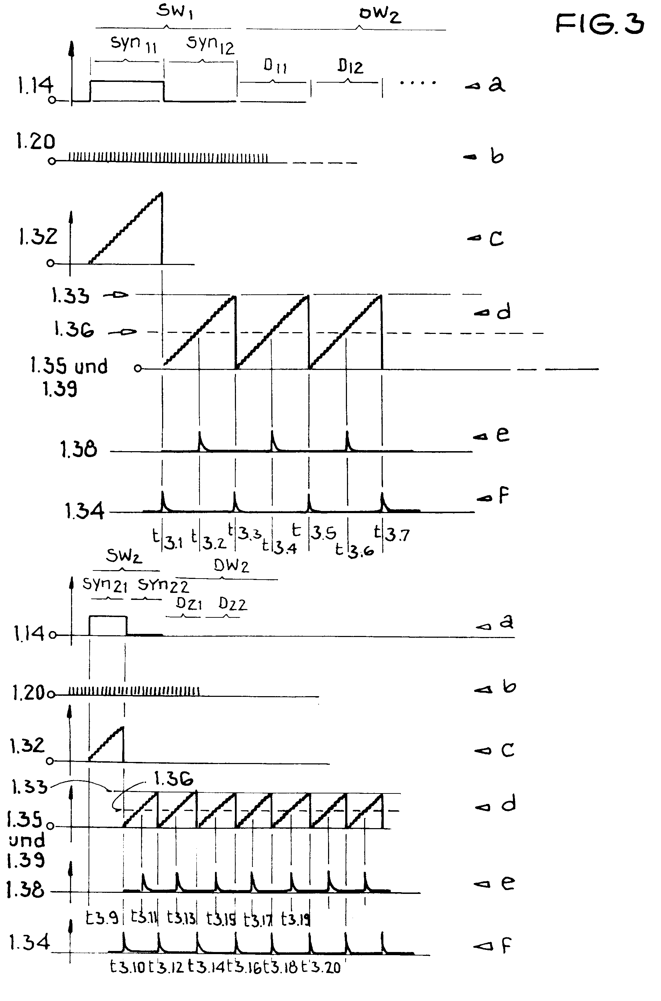

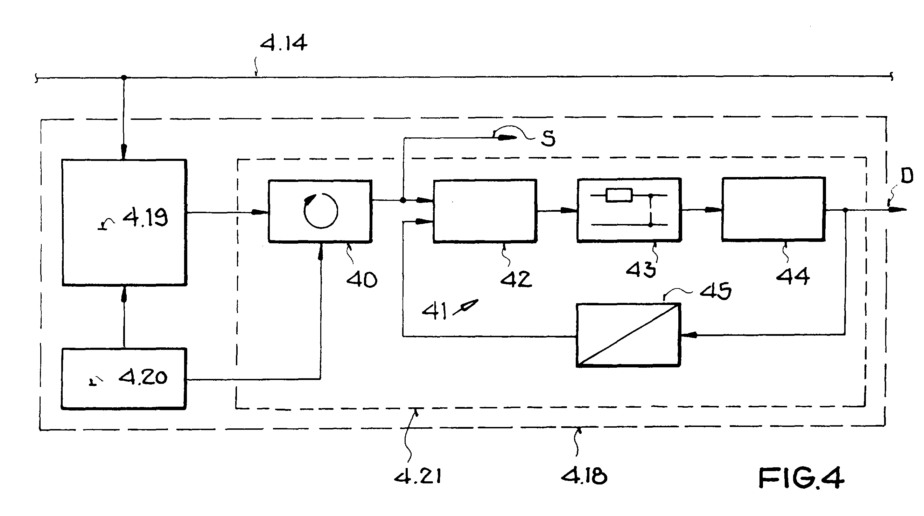

Fig. 3 zeigt nun in einem Impulsdiagramm den zeitlichen Ablauf aller wichtigen Größen des in Figur 2 dargestellten Taktgenerators 1.18. Die Bezeichnung der Größen entspricht dabei dem in Figur 2 gezeigten Elementen und Funktionsblöcken, d.h. Figur 4a zeigt den zeitlichen Verlauf des Signalpegels an der BUS-Leitung 1.14, Figur 4b den Oszillatortakt des Oszillators 1.20, Figur 4c den Zählvorgang im TFI-Zähler 1.32, Figur 4d die Zähl- und Vergleichsvorgänge innerhalb des Datenübernahme - Taktgenerator 1.21, Figur 4e den Datenübernahmetakt D aus dem $T_R$-Vergleicher 1.38 und in Figur 4f den Systemtakt S aus dem $T_B$-Vergleicher 1.34.

Empfängt zum Zeitpunkt $t_{3.0}$ das Modul nach einer Totzeit bzw. dem Anschließen der Versorgungsspannung einen ersten Signalimpuls $syn_{11}$, so wird dieser über die Torschaltung 1.31 an den TFI-Zähler 1.32 weitergeleitet.

Der TFI-Zähler 1.32 wird, wie in Figur 3c dargestellt, definiert auf Null rückgesetzt und zählt nunmehr die Anzahl der Oszillatortakte (Figur 4b) bis zum Zeitpunkt $T_{3.1}$, bei dem die Flanke des ersten Synchronisierungsimpulses $Syn_{11}$ abhält. Der zum Zeitpunkt $t_{3.1}$ anliegende Zählwert des TFI-Zählers 1.32 wird, gegebenenfalls nach Vergleich mit zulässigen Wertebereichen, als Speicherschwellwert in den TB-Speicher 1.33 abgelegt, dies in Figur 3d visualisiert werden soll. Der ermittelte Zählwert wird im $T_R$-Teiler 1.37 parallel dazu geteilt und im $T_R$-Speicher 1.36 als zweiter Schwellwert abgelegt. Die Zähler 1.35 und 1.39 werden zum Zeitpunkt $t_{3.1}$ zurückgesetzt und zählen von da an die Oszillatortakte. Zum Zeitpunkt $t_{3.2}$ erreicht der $T_R$-Zähler 1.39 den in 1.36 vorgegebenen Schwellwert, so daß der Vergleicher 1.38 einen Datenübernahmetakt D (vgl. Figur 4e) erzeugt. Zum Zeitpunkt $t_{3.3}$ erreicht der Zähler 1.35 den im $T_B$-Speicher 1.33 abgelegten Schwellwert, lösen daraufhin einen Systemtakt S (vgl. Figur 3f) aus und setzen dabei wieder die Zähler 1.35 und 1.39 zurück. Die zwei in Figur 3a gezeigten Synchronisierungsimpulse $syn_{11}$ und $syn_{12}$ können von ihrem Pegel auch getauscht werden, wenn der TFI-Zähler 1.32 bzw. die Torschaltung 1.31 auch auf entsprechend die steigenden und fallenden Flanken reagiert. Zum Zeitpunkt $t_{3.3}$ beginnt dann wiederum durch Zählen der Oszillatortakte die Erhöhung der Zählwerte in den Zählern 1.35 und 1.39, deren Zählwerte jeweils mittels der Vergleicher 1.34 und 1.38 mit den in den Speichern 1.33 und 1.36 vorgegebenen Schwellwerten erfolgt, wodurch wiederum die nun folgenden System- und Datentakte abgeleitet werden. Die Pegel der Datenimpulse $D_{11}$ ff.

tragen nunmehr die an den Steuerschaltkreis 1.25 bzw. an den Ausgangsschaltkreis 1.26 zu übertragenden Informationen. Die Pegel der Datenimpulse werden dabei jeweils mittig mittels des in Figur 3e dargestellten Datenübernahmetaktes abgetastet. Am Ende des ersten Datenwortes $DW_1$ schließt sich eine Totzeit an. Zum Zeitpunkt $t_{3.9}$ wird eine neue Synchronisierungsimpulsfolge $SW_2$ empfangen. Die Dauer der Synchronisierungsimpulse $Syn_{21}$ und $Syn_{22}$ ist jedoch verschieden von denen der ersten Synchronisierungsimpulsfolge $SW_1$. In identischer Art und Weise wird wiederum, wie in Figur 3c dargestellt, im TFI-Zähler 1.32 die aktuelle Länge des ersten Synchronisierungsimpulses Syn21 durch Abzählung der Oszillatortakte erfaßt und wie in Figur 3d dargestellt, die Anpassung der Schwellwerte in den Speichern 1.33 und 1.36 vorgenommen. Die Zähler 1.35 und 1.39 werden zurückgesetzt und erfassen nunmehr wieder bis zum Erreichen der entsprechenden Schwellwerte die Anzahl der Oszillatortakte, wobei jeweils bei Erreichen der Schwellwert in den Vergleichern 1.34 und 1.38 entsprechend der System- und Datenübernahmetakt D (vgl. Figuren 3e und 3f) erzeugt wird. Entscheidend ist dabei, daß sich die Taktfrequenz des Datenübernahmetaktes D in Figur 3e entsprechend der nunmehr kürzeren Synchronisierungsimpulsfolge angepaßt hat.

Die Anpassung der Sendefrequenz stößt dabei einzig bei der Dimensionierung der Zähler 1.32, 1.35, 1.39 an Grenzen, die jedoch entsprechend bedarfsgerecht ausgelegt werden können. Außerdem erhöht sich bei der Erhöhung der Sendetaktfrequenz auch der relative Fehler bei der Quantisierung mittels des Oszillatortaktes, so daß ein entsprechend hochfrequenter Oszillator zu verwenden ist. Generell macht jedoch Figur 3 deutlich, daß über einen weiten Frequenzbereich hin mit einfachen Möglichkeiten der Empfänger an die Sendefrequenz angepaßt werden kann.

Fig. 4 zeigt einen anderen Taktgenerator 4.18, der ebenfalls zur Durchführung des erfindungsgemäßen Verfahrens eingesetzt werden kann.

Dieser Taktgenerator 4.18 weist wiederum eine Taktfrequenzinformationserfassungsschaltung 4.19 auf, der die Impulse einer den Sendetakt anzeigenden Impulsfolge, insbesondere die einzelnen Bits eines Synchronwortes SW sowie das Ausgangssignal eines Oszillators 4.20 zugeführt wird. Die Taktfrequenzinformationserfassungsschaltung 4.20 ermittelt, wie bereits anhand von Fig. 2 beschrieben, einen der Dauer eines Impulses oder Bits entsprechenden Zählwert, der anzeigt, wieviel Oszillatortakte der Dauer eines Bits entsprechen. Dieser Zählwert wird einem Ringschieberegister 40 mit variablem Ende zugeführt, um dessen variables Ende einzustellen. Zur Erzeugung des Systemtaktes S wird das Ringschieberegister 40 Vom Oszillator 4.20 getaktet, so daß jeweils nach Ablauf der Dauer eines Impulses bzw. Bits ein Systemtaktsignal S ausgegeben wird.

Zur Erzeugung des Datenübernahmetaktes D ist ein Phasenregelkreis 41 mit einem Phasendetektor 42, einem Schleifenfilter 43 und einem spannungsgesteuerten Oszillator (VCO) 44 vorgesehen. Das Ausgangssignal des spannungsgesteuerten Oszillators 44 wird als Datenübernahmetakt D dem Datenübernahmeschaltkreis 4.23 zugeführt, und an einen Eingang des Phasendetektors 42 zurückgeschleift. Dabei kann in der Rückkoppelungsleitung vom spannungsgesteuerten Oszillator 44 zum Phasendetektor 42 ein Frequenzteiler 45 vorgesehen sein.

Bei diesem Taktgenerator 4.18 wird also mittels analoger Bauelemente der Systemtakt S von einem Ringschieberegister mit variablem Ende erzeugt, das vom Oszillator 4.20 getaktet und entsprechend einem der Dauer eines Bits entsprechenden Zählwert eingestellt ist. Zur Erzeugung des Datenübernahmetaktes D wird der Systemtakt S mittels einer Phasenregelschleife 41 so phasenverschoben, daß die Datenübernahme etwa in der Mitte eines Bits erfolgt.

Gemäß dem erfindungsgemäßen Verfahren wird also bei jeder Datenübertragung von der Zentraleinheit zu einem peripheren Modul der Taktgenerator 4.18 mit dem Sendetakt der Zentraleinheit synchronisiert. Hierdurch lassen sich Langzeitdriften sowie temperatur- und alterungsbedingte Änderungen der Oszillatorfrequenz ausgleichen. Zweckmäßigerweise schwingt der Oszillator 4.20 mit einer Frequenz, die gleich dem fünfzig- bis zweihundertfachem der normalen Sendetaktfrequenz ist.

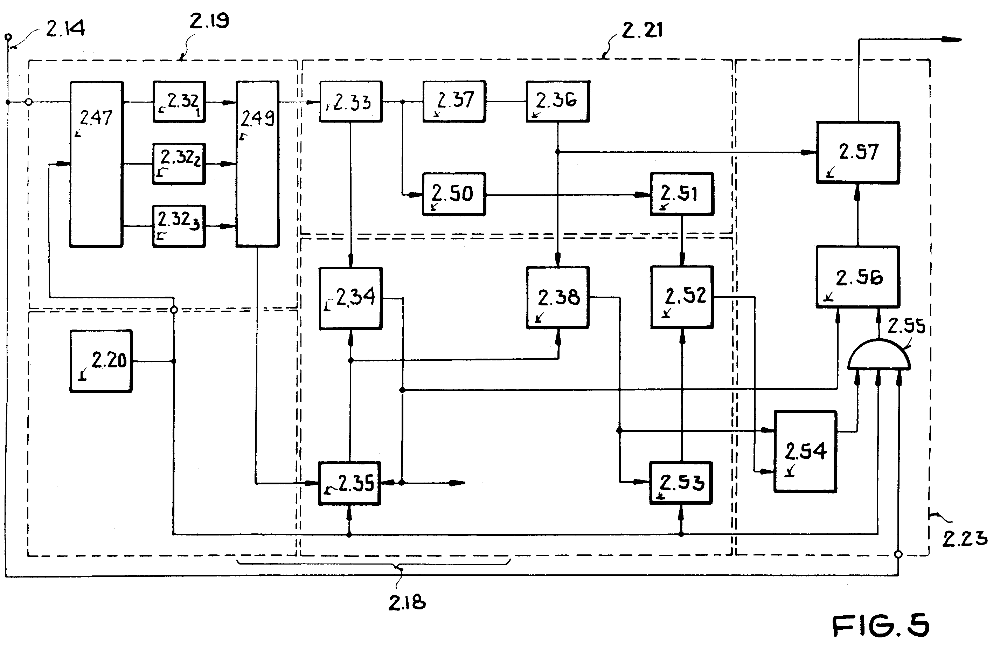

Fig. 5 zeigt in einem zweiten Ausführungsbeispiel eine besonders bevorzuugte Weiterbildung der Erfindung. Der Taktgenerator 2.18 hat als Eingangsstufe wieder eine TFI-Erfassungsschaltung 2.19, der über den Dateneingang des Takt-Generators 2.18 die Daten und über einen Referenzeingang die Oszillatortakte eines Oszillators 2.20 zugeleitet sind, dessen Takt-Periodendauer $T_O$ wesentlich kürzer ist als die Bitdauer $T_B$ der Bit-Impulse der Daten und in einer typischen Auslegung des Oszillators ca. 1/100 der niedrigstmöglichen Bitdauer beträgt, mit der die Datenblöcke gesendet werden.

Die TFI-Erfassungsschaltung 2.19 umfaßt bei dem zweiten Ausführungsbeispiel drei TFI-Zähler $2.32_1$, $2.32_2$. $2.33_3$ deren Zähl-Eingänge an diesen einzeln zugeordnete Impulsausgänge einer Weichen-Schaltung 2.47 angeschlossen sind, die ihrerseits die Eingangsstufe von 2.19 bildet.

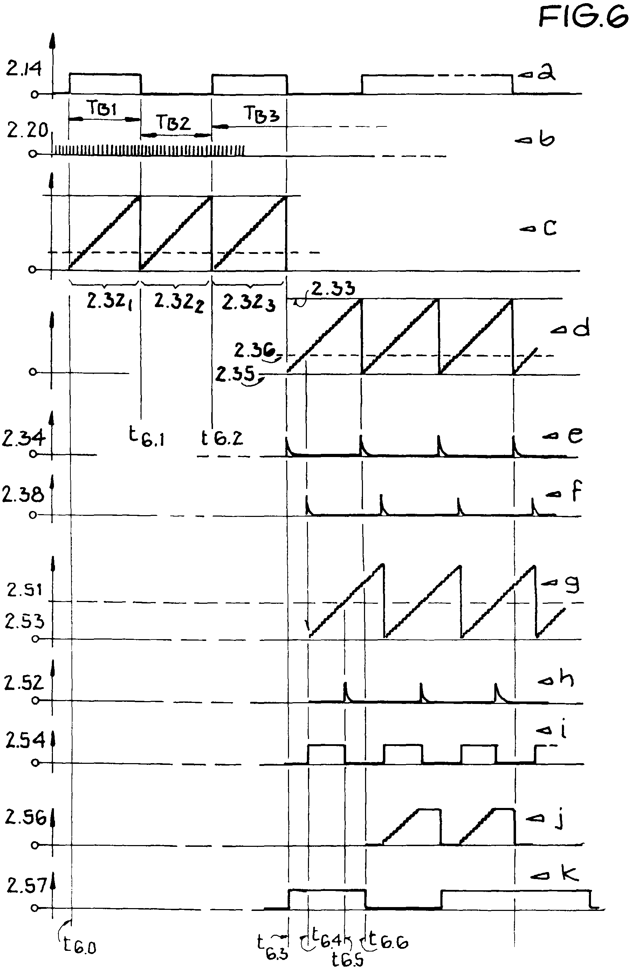

Diese Weichenschaltung 2.47 vermittelt, gesteuert durch die zum Zeitpunkt $t_{6.0}$ (vgl. Fig.6) ansteigende Flanke des ersten Hochpegel-Impulses des Synchronisationswortes, die in $t_{6.1}$ abfallende Flanke dieses ersten Hochpegellmpulses $T_{B1}$, sowie durch die in $t_{6.2}$ ansteigende Flanke und die in $t_{6.3}$ abfallende Flanke des zweiten Hochpegel-Impulses $T_{B3}$ des Synchronisationswortes im Sinne einer Folgesteuerung die folgenden Funktionen:

Für die Dauer $T_{B1}$ des ersten Hochpegel-Impulses des Synchronisationswortes (SW) wird die innerhalb dieser Zeitspanne erzeugte Anzahl von Ausgangsimpulsen des Oszillators 2.20 im TFI-Zähler $2.32_1$ gezählt

(vgl. Fig.6c) und der dabei zum Zeitpunkt $t_{6.1}$ erreichte Zählerstand in eine Vergleichsstufe 2.49 eingegeben und gespeichert.

Für die Dauer $T_{B2}$ des hierauf folgenden Niedrig-Pegel-Bitsignals des Synchronisationswortes werden die vom Oszillator 2.20 abgegebenen Ausgangsimpulse mittels des zweiten TFI-Zählers $2.32_2$ gezählt, wobei der hierbei zu $t_{6.2}$ erreichte Zählerstand wiederum in die Vergleichsstufe 2.49 eingegeben wird. Desgleichen werden die während der Bitdauer $T_{B3}$ des zweiten Hochpegel-Impulses erzeugten Ausgangsimpulse des Oszillators 2.20 mittels des dritten TFI-Zählers $2.32_3$ gezählt und der Endzählerstand in die Vergleichsstufe 2.49 eingegeben, die aus einem nach Plausibilitätskriterien erfolgenden Vergleich der End-Zählerstände der Zähler $2.32_1$, $2.32_2$, $2.33_3$ und 2.43 einen die Bitdauer $T_B$ in Einheiten der Periodendauer $T_O$ der Ausgangsimpulse des Vergleichsoszillators 2.20 repräsentierenden "wahrscheinlichsten" Zahlenwert bildet. In zweckmäßiger Auslegung der Vergleichsstufe 2.49 ermittelt diese den die Bitdauer $T_B$ repräsentierenden Zahlenwert als Mittelwert der Zählerstände, wenn deren Streuung gering ist. Zeigt andererseits der Vergleich, daß zwei Zählerstände identisch oder nur geringfügig unterschiedlich sind, ein Zählerstand jedoch erheblich abweicht, so wertet die Vergleichsstufe 2.49 dies dahingehend, daß der abweichende Zählerstand aufgrund einer Störung zustande gekommen ist und bildet die Vergleichszahl als Mittelwert lediglich der nur geringfügig verschiedenen Zählerstände.

Es versteht sich, daß es bei Anwendung einer invertierten Logik auch möglich ist, die Bitdauer jeweils während der Low-Pegel-Impulse zu ermitteln, bzw. ohne Wartezeiten, wenn sowohl die Low-Pegel-Impulse als auch die High-Pegel-Impulse ausgewertet werden.

Der die Bitdauer $T_B$ repräsentierende $T_B$-Referenzwert wird zum Zeitpunkt $t_{8.3}$ in einen $T_B$-Speicher 2.33 einer Speichereinheit eingegeben, die als weitere Speichereinheiten einen Verzögerungszeit-(TR)-Speicher 2.36 und einen Tastzeit-(TR)-Speicher 2.51 umfaßt.

Der Inhalt des $T_R$-Speichers 2.36 wird mittels eines $T_R$-Teilers 2.37 vom Speicherinhalt des $T_B$-Speichers 2.33 abgeleitet und repräsentiert somit eine Verzögerungszeitspanne $T_R$ von 25% der Bitdauer $T_B$; der Speicherinhalt des $T_A$-Speichers 2.51 wird mittels eines $T_R$-Teilers 2.50 vom Inhalt des $T_B$-Speichers 2.33 abgeleitet und repräsentiert somit eine Abtastzeitspanne $T_R$ von 50% der Bitdauer $T_B$. Diese sind als Schwellwerte entsprechend den Speichern 2.33 und 2.36 in Fig. 6d visualisiert.

Des weiteren umfaßt der Taktgenerator 2.18 einen $T_B$-Zähler 2.35 und einen $T_A$-Zähler 2.53, denen als Zähl-Eingangsimpulse permanent die Ausgangsimpulse des Oszillators 2.20 zugeleitet sind, wie dies bereits im ersten Ausführungsbeispiel erläutert wurde. Nach dem Erfassen des dritten Synchronisierungsimpulses werden die Zähler 2.35 und 2.53 zurückgesetzt, indem bspw. über eine Verbindungsleitung zwischen der Vergleichsstufe 2.49 und dem $T_B$-Zähler 2.35 ein Reset-Befehl erfolgt. Generell ist aber auch denkbar, daß allgemein alle Elemente des Takt-Generators 2.18 einen System-Reset über eine nicht näher gezeigte System-Reset-Leitung erhalten, bevor die neuen Werte übergeben werden, da meist eine solche System-Reset-Leitung bereits vorgesehen ist.

Der Zählerstand des $T_B$-zählers 2.35 (vgl. Fig.6d) wird zum einen mittels eines $T_B$-Vergleichers 2.34 fortlaufend mit dem für die Bitdauer charakteristischen Zählerstand des $T_B$-Speichers 2.33 (Schwellwert 2.33 in Fig. 6d) verglichen, wobei der $T_B$-Vergleicher 2.34 jeweils dann, wenn der Zählerstand den gespeicherten Referenzwert erreicht, einen Systemtakt-Impuls S kurzer Dauer abgibt (vgl. Fig.6e). Der Systemtaktabstand entspricht dabei jeweils der zuletzt für zulässig befundenen Impulsdauer ($T_B$) bzw. einem vorgegebenen Hilfswert, dessen Funktion noch später erläutert werden soll. Durch diese Systemtaktimpulse des TB-Vergleichers 2.34 wird der $T_B$-Zähler 2.35 jeweils wieder zurückgesetzt.

Des weiteren wird der Zählerstand des ersten Zählers 2.61 mittels eines $T_R$-Vergleichers 2.38 fortlaufend auch mit dem Inhalt des $T_R$-Speichers 2.36 verglichen (als Schwellwert 2.36 in Fig.6d dargestellt), wobei der $T_R$-Vergleicher 2.38 als Rücksetzimpulse für den $T_A$-Zähler 2.53 ausgenutzte Impulse kurzer Dauer jeweils dann erzeugt, wenn Gleichheit des Zählerstandes des $T_B$-Zählers 2.35 mit dem Speicherinhalt des $T_A$-Speichers 2.36 erreicht ist (vgl. Fig.6f).

Aus dem zeitlichen Vergleich der Entwicklung des Zählerstandes des $T_B$-Zählers 2.35 (vgl. Fig.6d) mit der zeitlichen Entwicklung des Zählerstandes des $T_A$-Zählers 2.53 (vgl. Fig.6g) ist unmittelbar ersichtlich, daß letzterer dem erstgenannten um 1/4 der Bitdauer $T_B$ nacheilt.

Weiter umfaßt der Taktgenerator 2.18 einen Tastzeit-($T_A$)-Vergleicher 2.52, der einen Vergleich des Zählerstandes des $T_A$-Zählers 2.53 mit dem Speicherinhalt des $T_A$-Speichers 2.51 vermittelt und kurz dauernde Ausgangsimpulse, deren zeitliche Folge in Fig. 6h wiedergegeben ist, jeweils dann erzeugt, wenn der Zählerstand des $T_A$-Zählers 2.53 den im $T_A$-Speicher 2.53 gespeicherten Zahlenwert, der beim zweiten dargestellten Ausführungsbeispiel 50% der Bitdauer TB entspricht, erreicht.

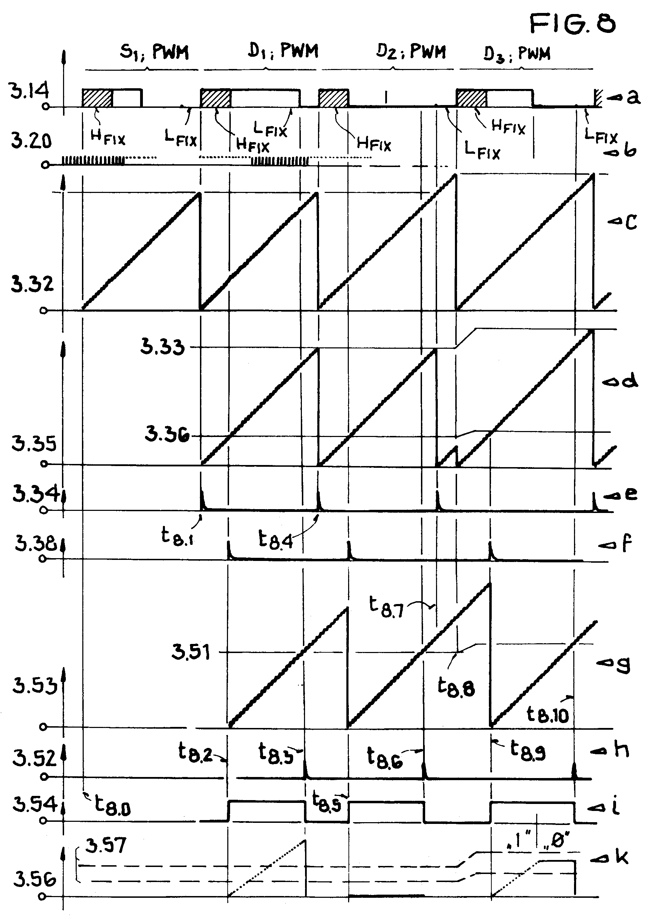

Der Daten-Übernahmeschaltkreis 2.27 in Fig. 5 umfaßt ein Flip-Flop 2.54 als bistabile Kippstufe, die durch die an einem Setz-Eingang empfangenen Ausgangsimpulse, die von dem $T_R$-Vergleicher 2.38 abgegeben werden, auf hohen Signalpegel an ihrem Ausgang setzbar ist, und durch die Ausgangsimpulse des $T_A$-Vergleicher 2.52, die des Flip-Flop 2.54 an deren Rücksetzeingang zugeleitet sind, auf niedrigen Signalpegel am Ausgang zurücksetrbar ist. Das Ausgangssignal des Flip-Flops 2.54 ist daher eine Folge von Hoch-Pegel-Impulsen, deren Dauer $T_A$ der Abtast-Zeitspanne entspricht, die beim zweiten Ausführungsbeispiel gleich der Hälfte der Bitdauer $T_B$ ist. Der Zeitverlauf der Hoch-Pegel-Impulse des Flip-Flops 2.54 ist in Fig. 8i qualitativ wiedergegeben, dem entnehmbar ist, das die Hoch-Pegel-Ausgangsimpulse nach 25% der Bitdauer $T_B$ einsetzen und nach 75% der Bitdauer $T_B$ wieder abklingen.

Der Datenübernahmeschaltkreis 2.27 umfaßt ein 3-Eingangs-UND-Glied 2.55, das an seinem Ausgang ein Hoch-Pegel-Signal abgibt, wenn an jedem seiner drei Eingänge ebenfalls ein High-Signal ansteht.

Der erste Eingang dieses UND-Gliedes 2.55 ist mit dem Ausgang des Flip-Flops 2.54 verbunden. Seinem zweiten Eingang ist der Takt des Oszillators 2.30 zugeleitet. Der dritte Eingang des UND-Gliedes 2.55 ist mit dem Dateneingang verbunden, über die die Datenblöcke dem jeweiligen Modul zugeleitet werden.

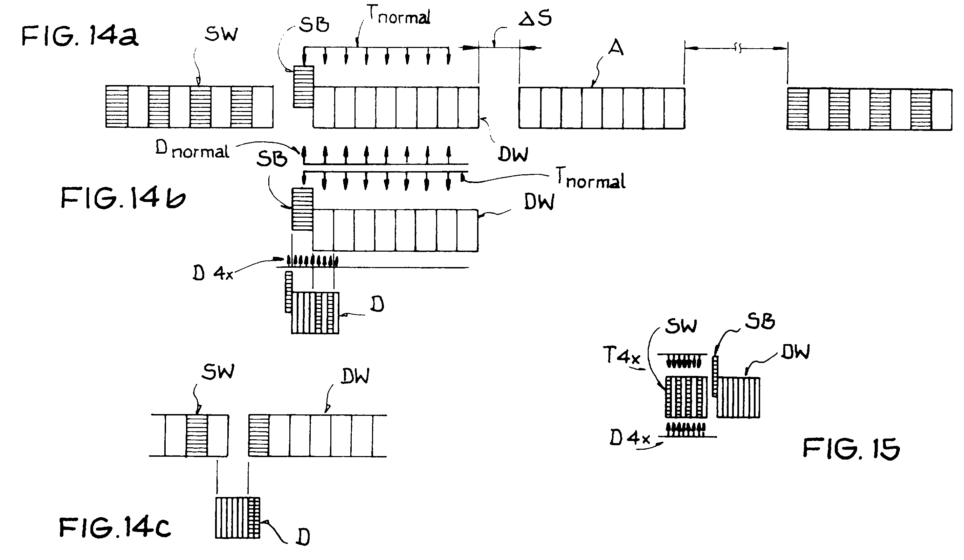

Der Ausgang des UND-Gliedes 2.55 ist mit dem Zähl-Eingang eines Pegelwert-Zählers 2.56 verbunden, der durch die Systemtakt-Impulses zurückgesetzt wird. Die durch das UND-Glied 2.55 vermittelte konjunktive Verknüpfung der von der Zentraleinheit gesendeten Daten mit den Ausgangsimpulsen des Oszillators 2.30, einerseits, und, andererseits, mit den Ausgangssignalen des Flip-Flops 2.54 bewirkt somit, daß, abgesehen von Instabilitäten der Schaltungsanordnung insgesamt und/oder Steuerimpulsen, deren Anzahl als signifikant geringer angesehen werden kann als die Zahl der Ausgangsimpulse des Referenzoszillators 2.20, dem Zähler 2.56 des Daten-Übernahmeschaltkreises 2.27 Zählimpulse nur dann angeboten werden, wenn ein High-Signal eines Daten-Impulses vorliegt, und daß diese Zählimpulse nur innerhalb der jeweiligen Abtast-Zeitspanne der Dauer $T_A$ dem Zähler 2.56 zugeleitet werden. Es entsteht eine Überabtastung innerhalb eines Zeitfensters, wie dies im Detail noch in Fig. 13 näher dargestellt und später beschrieben werden soll. Der Zählerstand nach Ablauf der Tast-Zeitspanne $T_A$ ist somit ein Maß für den Signalpegel, High oder Low, der Bit-Signale der Daten-Impulse ist.

Bei dem zweiten Ausführungsbeispiel bedeutet dies unter der Voraussetzung eines stabilen und störungsfreien Betriebes, daß der maximale Zählerstand des Pegelwert-Zählers 2.56 dem halben Wert des Inhalts des $T_B$-Referenzwertspeichers 2.33 entspricht, wenn das verarbeitete Bit-Signal ein High-Signal war und einem Low-Signal der Zählerstand "0" entspricht.

Der zeitliche Verlauf des Zählerstandes des Pegelwert-Zählers 2.56 ist in der Fig. 6j qualitativ wiedergegeben.

Zur weiteren, "bewertenden" Verarbeitung des Zählerstandes des Pegelwert-Zählers 2.56 ist ein Pegel-Komparator 2.57 vorgesehen, der den Zählerstand mit oder nach Ablauf der Tastzeitspanne $T_A$ mit einem Schwellenwert, der niedriger ist als der maximal erreichbare Zählerstand, vergleicht und, gesteuert durch den Systemtakt, jeweils für die Dauer $T_B$ ein High-Signal abgibt, wenn das verarbeitete Signal des zugeleiteten Daten-Impuls ein High-Signal gewesen ist, alternativ dazu ein Low-Signal für Low-Signale des jeweiligen Daten-Impulses. Der zeitliche Verlauf der vom Pegel-Komparator 2.57 abgegebenen, für die weitere Verarbeitung im angesprochenen Steuermodul 2.13 übernommenen Daten-Signale ist in Fig. 6k qualitativ wiedergegeben, aus der unmittelbar ersichtlich ist, daß die Datenübernahme und Weiterleitung derselben im jeweiligen Steuermodul 2.13 zu einer Retardation gegenüber den empfangenen Daten-Impulse um jeweils eine Bitdauer $T_B$ führt.

Um einen möglichst großen Störabstand und damit eine möglichst hohe Sicherheit gegen "Fehlentscheidungen" des Pegel-Komparators 2.57 zu erreichen, ist der Schwellwert, oberhalb welchem der Komparator 2.57 den Zählerstand als High-Signal wertet und ausgibt, zu 50% des ohne Störimpulse höchstmöglichen Zählerstandes des Zählers 2.57 (vgl. auch Fig.13) gewählt. Bei dem erläuterten Ausführungsbeispiel entspricht somit der Schwellenwert dem Speicherinhalt des $T_R$-Speichers 2.36, so daß dieser auch zur Vorgabe des Vergleichsschwellenwertes ausnutzbar ist, mit dem der Pegel-Komparator 2.57 den Zählerstand des Zählers 2.93 vergleicht.

In einer typischen Auslegung des Steuerungssystems 2.10 arbeitet dessen Zentraleinheit 2.12 mit Sendetakten, welche Bitdauern $T_B$ zwischen $4 \times 10^{-6}$s und $2 \times 10^{-5}$s entsprechen, und die Vergleichsoszillatoren 2.30 der Steuermodule 2.13 sind auf eine Frequenz um $2{,}5 \times 10^7 \text{s}^{-1}$ ausgelegt.

Das Impulsdiagramm gemäß Fig. 6 wurde bereits im Zusammenhang mit Fig. 5 erläutert.

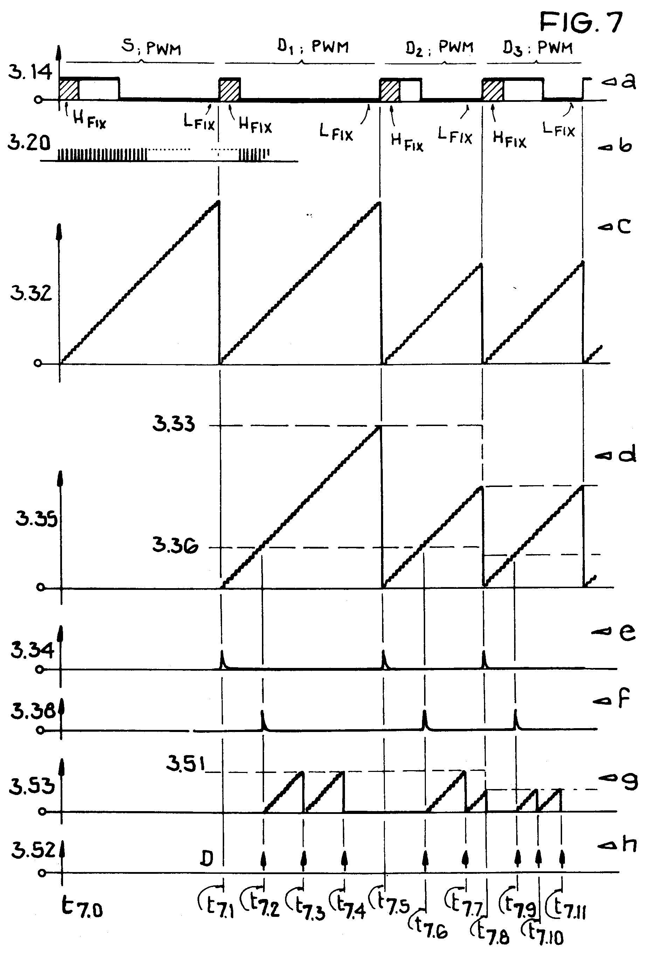

Figur 7 zeigt ein Impulsdiagramm der wichtigsten Größen in ihrem zeitlichen Verlauf für die Ansteuerung eines Taktgenerators gemäß Fig. 5 mit PWM-Signalen.

In dem Taktgenerator 3.18 erfaßt wiederum der TFI-Zähler 3.32 getaktet vom Oszillator 3.20 die Dauer eines Synchronisierungsimpulses ($S_{PWM}$), wobei der TFI-Zähler 3.32 entsprechend der Form von PWM-Signalen jeweils nur auf einen Flankentyp, in diesem Beispiel auf die aufsteigende Flanke zum Zeitpunkt $t_{7.0}$ und $t_{7.1}$ reagiert. Das in Figur 7a dargestellte PWM-Signal weist bei Synchronisierungs- und Daten-Impulsen eine erste Fixpegeldauer $H_{Fix}$ sowie am Ende des PWM-Wortes eine zweite Fixpegeldauer $L_{Fix}$ entsprechend entgegengesetzten Pegel auf, so daß unabhängig vom logischen Inhalt der PWM-Information jeweils zwingend ein Pegelwechsel auftritt, wie in Figur 7a zum Zeitpunkt $t_{7.1}$ zu erkennen. Nach Erfassung der Dauer des Synchronisierungsimpulswortes SPWM wird zum Zeitpunkt $t_{7.1}$ der aktuell im Zähler 3.32 erreichte Zählwert der Oszillatortakte (vgl. Figuren 7a, b und c) an die Vergleichsstufe 3.49 übergeben und dann der Zähler 3.32 rückgesetzt. Gleichzeitig prüft die Vergleichsstufe 3.49 die Zulässigkeit des ermittelten Zählwertes und gibt ggf. diesen an den $T_B$-Speicher 3.54 ab. Der Wert wird dann den in den Teilern 3.37 und 3.50 geteilt und in die Speicher 3.36 und 3.51 abgelegt. Es wird also deutlich, daß die Speichereinheit letztlich den gleichen Aufbau hat, wie die Speichereinheit aus Figur 5. Unterschiedlich ist jedoch die in den Teilern 3.37 und 3.50 hinterlegte numerische Operation. Der $T_R$-Teiler 3.37 zieht nämlich zunächst von dem im $T_B$-Speicher 3.33 abgelegten Impulsrahmenzählwert die beiden fest vorgegebenen Fixpegeldauerwerte ab und teilt das Ergebnis danach durch 6, wobei der Quotient 6 genau die Hälfte eines Datenimpulses des 3 Bit PWM-Datenwortes ergibt. Dem $T_A$-Teiler 3.51 abgelegte numerische Operation beginnt ebenfalls mit dem Abzug der fest vorgegebenen Fixpegeldauerwerte, dessen Ergebnis dann entsprechend der Bitanzahl des PWM-Wortes durch 3 geteilt wird. Somit wird wieder im $T_R$-Speicher 3.36 eine Verzögerungszeit zur Mitte des ersten Datenimpulses abgelegt und im $T_A$-Speicher 3.51 die Zeitdauer eines Datenimpulses. Mit dem Übergeben eines neuen Wertes an den Speicher 2.33 löst die Vergleichsstufe 3.49 ein System-Reset für die Zähler 3.35 und 3.53 aus. Der $T_B$-Zähler 3.35 zählt nunmehr die Anzahl der Oszillatortakte, wie in Figur 7d dargestellt, und erreicht dabei zum Zeitpunkt $t_{7.2}$ im $T_R$-Vergleicher 3.38 den Schwellwert des $T_R$-Speichers 3.36, woraufhin der $T_R$-Vergleicher 3.38 ein Taktsignal, wie in Figur 7e dargestellt, an den $T_A$-Zähler 3.53 abgibt. Der Zähler 3.53 seinerseits wird dadurch rückgesetzt und zählt nun folgend die Anzahl der Oszillatortakte bis zum durch den Schwellwert im $T_A$-Speicher 3.51 vorgegebenen Schwellwert. Der $T_A$-Vergleicher 3.52 löst daraufhin einen Datenübernahmetakt D (vgl. Figur 7g) aus, mit welchem die nachgeordnete Datenübernahmeschaltung getaktet wird und gleichzeitig der Zähler 3.53 zurückgesetzt wird. Dies wiederholt sich entsprechend der Anzahl der Datenimpulse im PWM-Wort. Zum Zeitpunkt $T_{7.5}$ erreicht der $T_B$-Zähler 3.35 (vgl. Figur 7d) den im $T_B$-Speicher 3.33 abgelegten Schwellwert, so daß der $T_B$-Vergleicher 3.34 in Impulsrahmentakt setzt. Zum Zeitpunkt $T_{7.5}$ wird nun senderseitig die Taktfrequenz erhöht und ein Datenwort $D_{2,PWM}$ mit einer verkürzten Datenimpulsdauer gesendet. Wieder erfaßt der Zähler 3.32 die Dauer des aktuellen Datenimpulses. Währenddessen läuft der Zähler 3.35 noch mit der im Speicher 3.54 abgelegten alten Impulsrahmendauer weiter.

Auch der Schwellwert im $T_R$-Speicher 3.36 basiert noch auf dem alten Impulsrahmenabstand, so daß zum Zeitpunkt $T_{7.6}$ der Zähler 3.53 gestartet wird (vgl. Figur 7g). Zum Zeitpunkt $T_{7.8}$ erreicht jedoch der Zähler 3.32 das Ende des PWM-Datenwortes $D_{2,PWM}$ und gibt die Zeitdauer an die Vergleichsstufe 3.49 weiter, welche daraufhin die Zähler 3.35 und 3.53 zurücksetzt und die neuen Schwellwerte in die Speicher 3.33 sowie 3.36 und 3.51 nach der Durchführung der numerischen Operation in 3.37 und 3.50 setzt. Das Datenwort $D_{3,PWM}$ kann nunmehr wieder exakt abgetastet werden. Der $T_B$-Zähler 3.35 erreicht zum Zeitpunkt $T_{7.9}$ den nunmehr auf dem neuen Impulsabstand beruhenden Schwellwert des $T_R$-Speichers 3.36 im $T_R$-Vergleicher 3.38, dessen Ausgangstaktsignal wiederum den $T_R$-Zähler 3.53 (vgl. Figur 7g) aktiviert. Dieser erreicht nunmehr zum Zeitpunkt $T_{7.10}$ den ebenfalls auf den neuen Impulsrahmenabstand angepaßten Schwellwert im $T_A$-Speicher 3.51, so daß sich der Abstand der Datenübernahmetakte D nunmehr auf den neuen Impulsrahmenabstand angepaßt hat. Wie aus Figur 7 insbesondere deutlich zu entnehmen ist, ist letztlich unter Verlust eines einzigen Datenimpulses, der auch als Synchronisierungsimpuls verstanden werden kann, eine Verkürzung der Impulsrahmendauer und damit eine Erhöhung der Datenübertragungsfrequenz möglich. Auch diesem Verfahren basiert letztlich auf dem bereits in Figur 5 gezeigten Grundkonzept. Einzig der numerischen Operation in den Teilern 3.37 und 3.50 muß anders programmiert sowie anstelle des Flip-Flops 3.55 das Ausgangssignal des $T_a$-Vergleichers 3.52 als Datenübernahmetakt D verwendet werden.

Figur 8 zeigt nunmehr ein Impulsdiagramm für ein Ausführungsbeispiel, in dem sich die Sendefrequenz und damit der Impulsrahmenabstand nur um einen geringen Betrag ändert. Dies ist insbesondere immer dann zu erwarten, wenn sich durch thermische oder alterungsbedingte Erscheinungen die elektrischen Eigenschaften der sende- bzw. empfangsseitigen Bauelemente ändern. Während im nun folgenden davon ausgegangen wird, daß sich sendeseitig die Taktfrequenz ändert, so ist dieses Beispiel auch direkt übertragbar dafür, falls beispielsweise anstelle dessen der Oszillatortakt entsprechend driftet.

Zum Zeitpunkt $T_{8.0}$ wird wiederum nach einer Totzeit ein Synchronisierungsimpuls $S_{PWM}$ gesendet, dessen Länge im TFI-Zähler 3.32 (vgl. Figur c) erfaßt wird. Zum Zeitpunkt $T_{8.1}$ wird der ermittelte Zählwert über die Vergleichsstufe 3.49 an den $T_B$-Speicher 3.33 und von da aus an den Speicher 3.36 und 3.51 nach den numerischen Operationen in 3.37 und 3.50 geschickt. Wie in Figur 8d zu erkennen, wird der $T_B$-Zähler 3.35 zurückgesetzt und der $T_R$-Vergleicher 3.38 erreicht zum Zeitpunkt $T_{8.2}$ den im Speicher 3.36 vorgegebenen Schwellwert. Daraufhin löst dieser einen Takt an den $T_A$-Zähler 3.53 aus, welcher daraufhin zurückgesetzt wird und nunmehr ebenfalls die Anzahl der Oszillatortakte zählt (vgl. Figur 8d, f und g). Der $T_A$-Zähler 3.53 erreicht zum Zeitpunkt $T_{8.3}$ den über den $T_A$-Vergleicher 3.52 vorgegebenen und im $T_A$-Speicher 3.51 abgelegten Schwellwert, woraufhin der $T_A$-Vergleicher 3.52 ein entsprechendes Taktsignal an das Flipflop 3.54 ausgibt. Das Flipflop 3.54 erzeugt somit ausgangsseitig wieder ein Zeitfenster zur Abtastung der Datenimpulspegel, wie dies bereits im zweiten Ausführungsbeispiel in Figur 6i dargestellt wurde. Hier ist jedoch die Dauer des Zeitfensters über mehrere mögliche Impulsbreitenzustände des Datenwortes hinweggewählt, so daß innerhalb des in Figur 8e dargestellten Impulsrahmentaktes jeweils genau ein Abtastfenster liegt, von welchem alle möglichen PWM-Impulsbreiten erfaßt werden. Deutlich wird dies insbesondere in Figur 8k, indem die dort gezeigten Schwellwerte S1 bis S4 jeweils mittig zwischen den erzielbaren Abtastzählwerten für die Einzelimpulsdauerbreiten liegen. Zum Zeitpunkt $T_{8.4}$ erreicht der $T_B$-Zähler 3.35 den von dem $T_B$-Speicher 3.33 vorgegebenen Schwellwert, so daß der $T_B$-Vergleicher 3.34 einen neuen Impulsrahmentakt sendet. Im nun sich an den Zeitpunkt $T_{8.4}$ anschließenden Datenimpuls $D_{2,pwm}$

weicht die aktuelle Impulsdauer ab, wie in den Figuren 8a und 8c angedeutet. Der Schwellwert im $T_B$-Speicher 3.33 basiert jedoch noch auf dem alten Impulsrahmenabstand, so daß der $T_B$-Zähler 3.35 bereits zum Zeitpunkt $T_{8.7}$ den nächsten Impulsrahmentakt erzeugt und den Zähler 3.35 zurücksetzt. Auch die Schwellwerte in den Speichern 3.33, 3.36 und 3.51 sind noch nicht auf die neue Impulsrahmenbreite angepaßt. Zum Zeitpunkt $T_{8.8}$ erfaßt aber wiederum der TFI-Zähler 3.32 den nunmehr neuen Impulsrahmenabstand, setzt den $T_B$-Zähler 3.35 wieder zurück und gibt, basierend auf dem neuen Impulsrahmenabstand, die entsprechenden Schwellwerte an die Speicher 3.33, 3.36 und 3.51, wie dies in den Figuren 8d und 8g angedeutet ist. Auch der Pegelkomparator 3.57 paßt seine Schwellwerte S1 bis S4 entsprechend der neuen Impulsrahmenbreite an, wie dies in Figur 8k dargestellt ist. Zum Zeitpunkt $T_{8.9}$ erreicht der $T_B$-Zähler 3.35 den nun aktualisierten Schwellwert im $T_R$-Speicher 3.36 und löst daraufhin wiederum die Rücksetzung des $T_R$-Zählers 3.53 aus, der sich an den Zeitpunkt $T_{8.8}$ anschließende Datenimpuls wird somit wieder zutreffend vom in Figur 8i dargestellten Zeitfenster erfaßt.

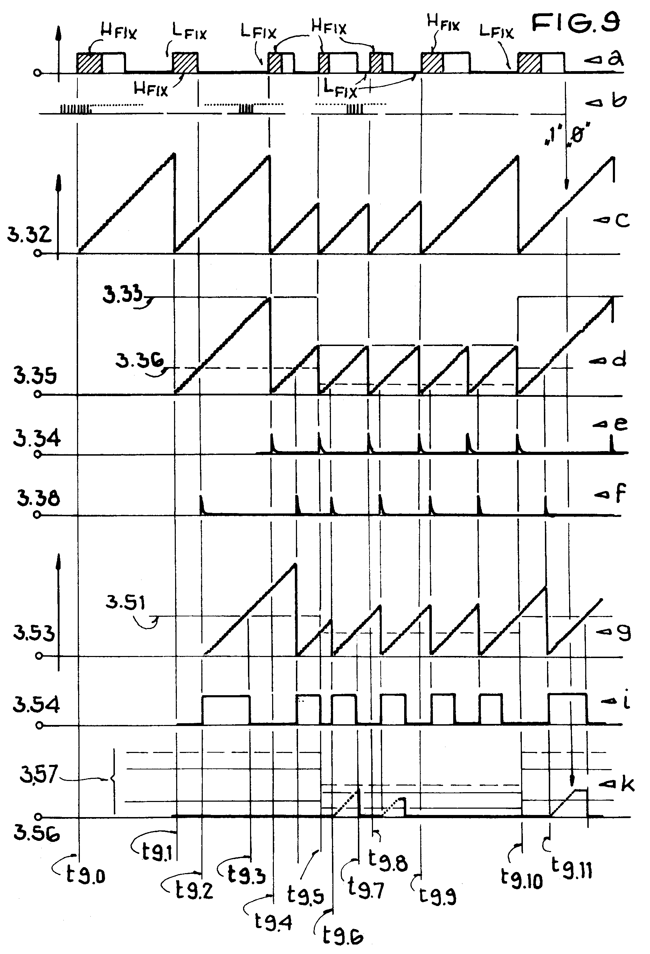

Figur 9 zeigt in einem weiteren Impulsdiagramm die Übertragung einer pulsweitenmodulierten Signalfolge, bei der zum Zeitpunkt $T_{9.0}$ zunächst ein Synchronisierungsimpuls gesendet wird, dessen Dauer wiederum im TFI-Zähler 3.32 erfaßt und zu $t_{9.1}$ im $T_B$-Speicher 3.33 als Schwellwert abgelegt wird. Die Zähler 3.35 und 3.53 erzeugen wieder die Taktsignale, aus denen das Flipflop 3.54 (vgl. Fig. 9i) das Abtastzeitfenster ableitet. Erhöht sich zum Zeitpunkt $T_{9.4}$ die senderseitige Übertragungsfrequenz, so wird dies zum Zeitpunkt $T_{9.5}$ vom $T_A$-Zähler 3.32 erkannt und daraufhin die Zähler 3.35 und 3.53 rückgesetzt sowie die Schwellwerte in den Speichern 3.33, 3.36 und 3.51 angepaßt (vgl. Fig. 9d und 9g). Ab dem Zeitpunkt $T_{9.5}$ hat der Taktgenerator 3.18 wieder die aktuelle Impulsrahmenbreite übernommen.

Zum Zeitpunkt $T_{9.9}$ verlangsamt sich wieder der sendeseitige Übertragungstakt. Während der TFI-Zähler 3.32 bereits die neue aktuelle Impulsbreite erfaßt (vgl. Fig.9c), arbeiten die Zähler 3.35 und 3.53 sowie die Speicher 3.33, 3.36 und 3.51 noch mit dem alten Impulsrahmen (vgl. Fig.9d&g). Dadurch entstehen je nach der Stärke der Erhöhung bzw. Verlangsamung eine Anzahl von fehlerhaften Zeitfenstern im Flip-Flop 3.54 (vgl. Fig. 9i). Da dies jedoch ein systeminhärenter Fehler ist, kann die Sendeseite diesen beispielsweise dadurch berücksichtigen, daß zu diesem Zeitpunkt, der wieder als Synchronisierungsimpuls aufgefaßt werden kann, ein Datensignal gesendet wird, welches zu keinem kritischen Zustand in den nachgeordneten Aktuatoren 11 führt. Zum Zeitpunkt $T_{9.10}$ erreicht der TFI-Zähler 3.32 wieder die nächste positive Flanke, gibt den Zählwert über die Vergleichsstufe 3.43 an den $T_B$-Speicher 3.33 und setzt die Zähler 3.35 und 3.53 zurück. Außerdem werden die Schwellwerte in den Speichern 3.36 und 3.51 wieder entsprechend angepaßt, wie dies in Figur 9 dargestellt wird. Der nun sich an den Zeitpunkt $T_{9.10}$ anschließende wieder langsame Datenimpuls wird wieder zutreffend vom Zeitfenster des Flip-Flops 3.54 erfaßt (vgl. Fig.9k ab $t_{9.11}$.

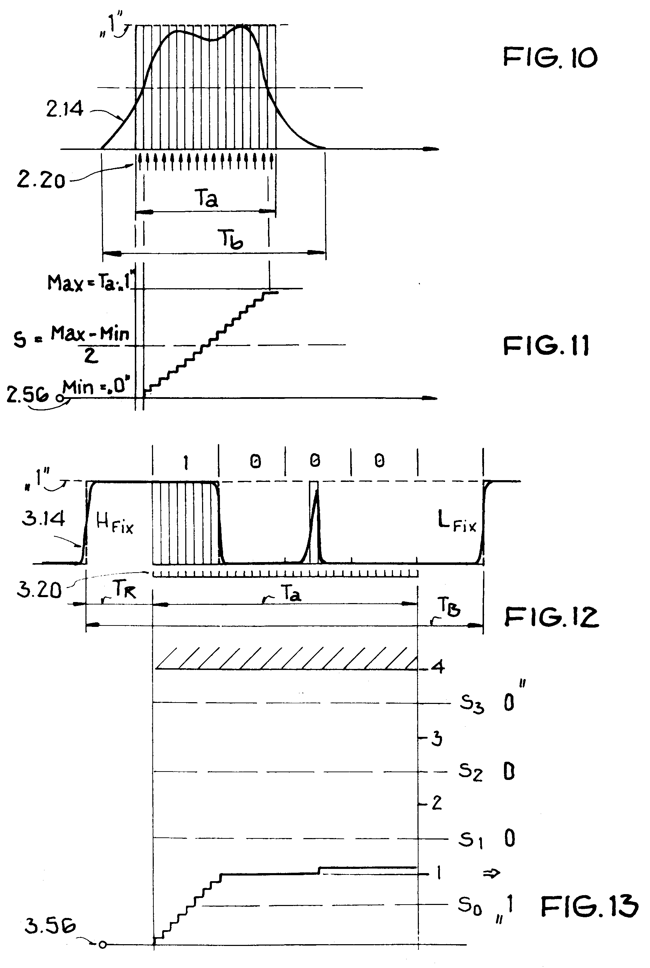

Die Figuren 10 bis 13 zeigen nun im Detail den Ablauf der Pegelwert-Erkennung im Datenübernahmeschaltkreis. Die Amplitude des in Fig. 10 gezeigten stark gestörten binären Signals auf der BUS-Leitung 2.14 erreicht zu keinem Zeitpunkt den definierten Soll-Pegelwert „1", bspw. durch Leitungsdämpfung und Störeinflüsse der Netzspannung.

Während innerhalb der Bitdauer $T_B$, insbesondere am Anfang und Ende deutlichee Übergangserscheinungen von einem zum anderen Pegelwert bei Pegelwechselfolge 0-1-0 zu beobachten sind, liegt innerhalb des mittig angeordneten Abtastzeitfensters $T_a$ mit hoher Wahrscheinlichkeit über dem internen Schwellwert im UND-Glied 2.55, so daß dieses jeweils für die einzelnen Abtastimpulse ein High-Signal abgibt. Die Abtastimpulse entsprechen dabei jeweils einem Takt des Oszillators, der, wie bereits oben erwähnt, aufgrund seiner hohen Frequenz sehr gut für diese Überabtastung verwendet werden kann. Die Ausgangsimpulse des UND-Glieds 2.55 werden dann, wie in Fig. 11 gezeigt, im Pegelwert-Zähler 2.56 gezählt. Während der erste und letzte Abtastimpuls innerhalb der Abtastzeitdauer $T_a$ keine Erhöhung des Pegelwert-Zählers 2.56 verursachen (vgl. Fig. 11), wird dennoch die die Auslöseschwelle S deutlich überschritten. Der Pegelwert-Zähler 2.56 kann maximal für jeden Abtastimpuls ein High-Signal erhalten, wie durch

$$Max = T_a * \text{„1"}$$

zum Ausdruck gebracht werden soll; minimal natürlich Null sein.

Betrachtet man nun verglichend auch die Fig. 12 und 13 so wird die prinzipielle Analogie in der verarbeitung von binären und pulsweitenmodulierten digitalen Signalen auch bei der Pegelwerterfassung deutlich. Für die Zeitdauer $T_a$ des Abtastfensters werden analog die im UND-Glied 3.55 konjunktiv verknüpften Abtastimpulse im Pegelwert-Zähler 3.56 inkrementiert. Die erste und zweite Fixpegeldauer ist bei diesem Beispiel durch die Verzögerungszeit $T_R$ ausgeblendet worden, damit der Pegelwert-Zähler 3.56 minimal tatsächlich Null sein kann. Das erzielte Zählerinkrement (vgl. Fig. 13 3.56) ist dabei nahezu unabhängig von der hochfrequenten Störung, die als einzelne Spitze im Zeitverlauf in Fig. 12 zu erkennen ist. Die optimalwerte der einzelnen möglichen Pegelwerte sind als 1,2,3,4 angegeben, während die Schwellen $S_0$ bis $S_3$ jeweils mittig dazwischen liegen. Als Ergebnis des sendeseitigen Signals 1-0-0-0 ergibt die Prüfung der einzelnen Schwellen des Pegelkomparators 3.57 wieder 1-0-0-0.

Je höher Taktfrequenz des Oszillators und damit die Überabtastung ist, desto eher werden Störungen im Mittel eliminiert.

In folgenden soll nun anhand der Figuren 14 und 15 die Funktion der Hilfsabtastfrequenz näher erläutert werden, insbesondere die Vorteile bei der Wahl einer gegenüber dem Normalbetrieb erhöhten Frequenz. Von entscheidender Bedeutung ist dabei der Wert des ersten Daten-Impulses, im folgenden Startbit SB genannt. Diese Weiterbildung ist für alle Verfahren der binären Datenübertragung, jdoch nicht für pulsweitenmodulierte Signale anwendbar, wie im folgenden näher erläutert wird.

Wie in Fig. 14a zu sehen, wird zunächst zu Beginn der Datenübertragung ein zumindest einen Synchronisierungsimpuls enthaltendes Synchronwort SW, in dem Fall ein 8-Bit-SW, mit einer Sendetaktfrequenz $T_{normal}$ gesendet bzw. empfangen und daraus empfangsseitig der Datenübernahmetakt $D_{normal}$ erzeugt.

Mit Beginn des Startbits SB wird der im Normalbetrieb der Sendetaktfrequenz $T_{normal}$ entsprechende Datenübernahmetakt $D_{normal}$ an den Datenübernahmeschaltkreis angelegt, und das Datenwort DW wird an den Steuerschaltkreis weitergeleitet. Der Steuerschaltkreis führt daraufhin die erforderlichen Operationen aus und sendet nach einer Sendeverzögerung $\Delta S$ ein Antwort-Datenwort A an die Zentraleinheit zurück. Nach Sendeschluß wird eine Totzeit gestartet, die bspw. vier oder mehr Takte des Datenübernahmetaktes bzw. des Systemtaktes im peripheren Modul beträgt und während der das Modul nicht empfangsbereit ist. Nach Ende der Totzeit wird das Modul wieder empfangsbereit geschaltet.

Mißglückt, wie in Fig. 14b durch Wegfall des Synchronwortes angedeutet, die Ableitung der Abtastfrequenz aus dem Synchronwort SW beispielsweise infolge von sporadisch auftretenden Problemen bei der Datenübertragung, weil beispielsweise ein Störimpuls zusammen mit dem Datenwort über die Sende/Empfangs-Einrichtung an den Takt-Generator gelangt ist, liegt also eine Synchronisationsstörung vor, so erzeugt der Takt-Generator einen Datenübernahmetakt mit einer Hilfsabtastfrequenz, die aus der zuletzt gespeicherten und für gültig befundenen Abtastfrequenz abgeleitet wird.

Zum Ableiten der Hilfsabtastfrequenz aus der zuletzt gespeicherten Abtastfrequenz wird diese mit einem vorgegebenen Faktor, vorzugsweise mit vier multipliziert, so daß ein Datenübernahmetakt $D_{4x}$ erzeugt wird, der wesentlich schneller ist, als der von der Zentraleinheit verwendete Sendetakt. In Fig. 14b ist der Datenübernahmetakt $D_{4x}$ schematisch im Vergleich mit dem von der Zentraleinheit gesendeten Datenwort DW und der zugehörigen Sendetaktfrequenz $T_{normal}$ dargestellt. Man erkennt dabei, daß in Folge des viermal schnelleren Datenübernahmetakts $D_{4x}$ bereits während der Dauer des Startbits SB drei Abtastungen erfolgen und die restlichen fünf Abtastungen so durchgeführt werden, daß das erste Bit des Datenworts viermal und das zweite Bit einmal abgetastet wird.

Da die Frequenz des Systemtakts für die Funktionseinheit verwendeten Abtastfrequenz entspricht, erfolgt die anschließende Verarbeitung der scheinbar empfangenen Daten sehr schnell und die anschließende Totzeit wird stark verkürzt, so daß das Modul sehr schnell wieder empfangsbereit geschaltet wird.

Ein weiterer Vorteil der sehr schnellen Datenübernahme im Störfall, die um ein Vielfaches schneller erfolgt als die normale Datenübernahme, die insbesondere mit der vierfachen Abtastfrequenz durchgeführt wird, besteht darin, daß eine Sammeladresse für alle Module des Systems bei geschickter Wahl der Sammeladresse nicht gelesen werden kann. Zweckmäßiger Weise wird als Sammeladresse 1-0-1-0 gewählt. Da ein Bit mit dem Wert 1 bei der beispielsweise beschriebenen viermal schnelleren Abtastung als 1-1-1-1 interpretiert wird, während ein Bit mit dem Wert 0 als 0-0-0-0 erfaßt wird, kann die Sammeladresse auch bei beliebigen Bitwerten im übertragenen Datenwort nicht fälschlicherweise gelesen werden. Selbst wenn die der übertragenen Adresse zugeordneten Abtastungen 2 Bits erfassen, kann beispielsweise die Bitfolge 1-1-1-0 oder 0-0-1-1 ermittelt werden, nicht aber die zweckmäßiger Weise gewählte Sammeladresse.

Auf diese Weise läßt sich insbesondere bei Sicherheitssystemen eine Fehlansteuerung der Module, insbesondere eine Fehlauslösung von insassenschützenden Einrichtungen in Folge einer Synchronisationsstörung sicher ausschließen, selbst wenn hier eine Sammeladresse verwendet wird, um im Falle eines gefährlichen Unfalls alle Module gleichzeitig anzusprechen.

Das erfindungsgemäße Verfahren zum Übertragen von Daten läßt sich auch anwenden, wenn dem Datenwort kein Startbit zugeordnet ist, wie in Fig. 14c dargestellt. In diesem Fall beginnt die Datenübernahme nach einer vorgegebenen Wartezeit, die sich an das Ende des Synchronworts SW anschließt und die beispielsweise 2 Takte dauert. Da im Falle einer gestörten Synchronisation der Datenübernahmetakt D mit einer erhöhten Abtastfrequenz gebildet wird, verkürzt sich auch die Wartezeit bis zum Beginn der Datenübernahme wie in Fig. 14c dargestellt ist.

Im betrachteteten peripheren Modul wird also beispielsweise der während des letzten Bits des Synchronwortes SW, während des zeitlichen Abstands zwischen Synchronwort SW und Datenwort DW und während des ersten Bits des Datenworts DW anstehende Signalpegel abgetastet, so daß sich beispielsweise die Bitfolge 0-0-0-0-0-0-1-1 ergibt. Auch in diesem Fall kann die Sammeladresse nicht fälschlicher Weise festgestellt werden.

Erfolgt bei einem Sicherheitssystem im Falles eines gefährlichen Unfalls die Datenübertragung von der Zentraleinheit zu den einzelnen Modulenmit der erhöhten Notfall-Abtastfrequenz $T_{4x}$, wie in Fig. 15 angedeutet, so sind Störungen bei der Übertragung der Taktfrequenzinformation ohne Bedeutung, da die Module in solch einem Fall automatisch auf die Notfall-Abtastfrequenz $D_{4x}$ umschalten. Damit läßt sich im Falle eines gefährlichen Aufpralls die Auslösung der einzelnen Schutzeinrichtungen gewährleisten.

Besonders vorteilhaft ist es, wenn der Sendebebtrieb eines Moduls unterbunden wird, sobald infolge einer Störung der Übertragung der Taktfrequenzinformation im Modul nicht nur auf die Notfall-Abtastfrequenz zur Erzeugung des Datenübernahmetakts umgeschaltet wird, um das Modul möglichst schnell wieder empfangsbereit schalten zu können, sondern gleichzeitig auch ein Sendebetrieb des Moduls gesperrt wird. Hierdurch wird eine Störung der Datenleitung durch das Modul ausgeschlossen.

Mit dem erfindinngsgemäßen Verfahren zum Übertragen von Daten in einem System, insbesondere in einem Sicherheitssystem für Kraftfahrzeuge, läßt sich also eine Fehlauslösung von Schutzeinrichtungen durch die Module 20 in Folge einer Synchronisationsstörung ausschließen, während auch bei einer gestörten Synchronisation im Notfall die Datenübertragung zu den einzelnen Modulen einwandfrei möglich ist. Da die einzelnen Module bei einer fehlerhaften Übertragung der Taktfrequenzinformation sehr schnell wieder in Empfangsbereitschaft sind, kann die Zentraleinheit ihren normalen Selbsttest- oder Überwachungsbetrieb fortsetzen, ohne den Zustand des jeweiligen Busstrangs berücksichtigen zu müssen.

**Patentansprüche**

1. Verfahren zum Übertragen von digitalen Daten, bei dem vor dem Senden der zu übertragenden Daten eine Synchronisationsimpulsfolge mit wenigstens einem Synchronisationsimpuls ausgesendet wird, welche empfangsseitig einen Datenübernahmetaktgenerator synchronisiert, **dadurch gekennzeichnet, daß** die Synchronisationsimpulsfolge sowohl den Synchronisationszeitpunkt als auch eine Taktfrequenzinformation enthält, welche empfängerseitig ermittelt wird und die Taktfrequenz des Datenübernahmetaktes entsprechend der ermittelten Taktfrequenzinformation durch einen in seiner Taktfrequenz steuerbaren Datenübernahmetaktgenerator angepaßt wird.

2. Verfahren nach Anspruch 1, **dadurch gekennzeichnet, daß** der Zeitdauer eines Synchronisationsimpulses die die Taktfrequenz des Datenübernahmetaktes beinhaltende Taktfrequenzinformation abgeleitet wird.

3. Verfahren nach Anspruch 2, **dadurch gekennzeichnet, daß** die Zeitdauer der einzelnen Synchronisationsimpulse jeweils der Dauer eines Daten-Impulses entspricht.

4. Verfahren nach Anspruch 2 oder 3, **dadurch gekennzeichnet, daß** die Synchronisationsimpulsfolge zumindest drei Synchronisationsimpulse mit alternierendem Pegel umfaßt.

5. Verfahren nach einem der Ansprüche 1 bis 4, **dadurch gekennzeichnet, daß** die zu übertragenden digitalen Daten in Form von Datenwörtern mit vorbestimmter Impulsanzahl gesendet werden.

6. Verfahren nach Anspruch 5, **dadurch gekennzeichnet, daß** nach jedem Datenwort eine Totzeit verstreicht.

7. Verfahren nach Anspruch 6, **dadurch gekennzeichnet, daß** die Totzeit wenigstens die Länge eines Datenwortes hat.

8. Verfahren nach einem der Ansprüche 6 oder 7, **dadurch gekennzeichnet, daß** nach jeder Totzeit zunächst wieder eine Synchronisationsimpulsfolge gesendet wird.

9. Verfahren nach Anspruch 1 oder 2, **dadurch gekennzeichnet, daß** die Daten und die Synchronisationsimpulse pulsweitenmoduliert sind, wobei

a) aus der Zeitdauer wenigstens eines Synchronisationsimpulses die die Länge eines Datenwortes beinhaltende Taktfrequenzinformation und

b) daraus ein Impulsrahmens des Datenübernahmetaktes abgeleitet wird,

c) das Datenwort innerhalb des Impulsrahmens über die Dauer des Anliegens eines vorab bestimmten ersten Signalpegels, der wenigstens für eine erste Fixpegeldauer anliegt, die Information beinhaltet und

d) die Synchronisationsimpulse und das Datenwort am Ende eines jeden Impulsrahmens in Bezug auf den nachfolgenden Impulsrahmen bzw. am Anfang des nachfolgenden jeweils eine zweite Fixpegeldauer mit einem zweiten, dem ersten entgegengesetzten Signalpegel aufweisen, so daß zu Anfang jedes neuen Impulsrahmens ein Pegelwechsel erfolgt.

10. Verfahren gemäß einem der Ansprüche 1 bis 8, **dadurch gekennzeichnet, daß** zur erstmaligen Erfassung der Taktfrequenzinformation bei übertragenen digitalen Daten

- die Zeitdauer wenigstens eines Synchronisationsimpulses mit einer empfangsseitig erzeugten Oszillatorfrequenz verglichen wird, wobei die Oszillatorfrequenz deutlich größer, vorzugsweise ein Vielfaches, der Impulsdauer ist,

- und die während der Zeitdauer des Synchronisationsimpulses auftretenden Oszillatortakte als Zählwert erfaßt werden

- und daraus die Taktfrequenzinformation gewonnen wird, indem aus der Zeitdauer des Synchronisationsimpulses der aktuelle Wert des Abstandes zum nachfolgenden Systemtakt (aktueller Systemtaktabstand) abgeleitet wird.

11. Verfahren nach Anspruch 10, **dadurch gekennzeichnet,** daß der ermittelte Zählwert der Oszillatortakte während der Zeitdauer eines Synchronisationsimpulses mit einem vorgegebenen Wertebereich verglichen wird und

a) falls der ermittelte Zählwert innerhalb des Wertebereichs liegt, der aktuelle Wert des Abstandes zum nächsten Systemtakt (aktueller systemtaktabstand) auf diesen Zählwert gesetzt wird oder,

b) falls der ermittelte Zählwert außerhalb des Wertebereichs liegt,

ba) entweder als aktueller Wert des Abstandes der letztvorherige Wert des Abstandes gewählt wird oder

bb) als aktueller Wert des Abstandes ein vorgegebener Hilfswert gewählt wird.

12. Verfahren nach Anspruch 11, **dadurch gekennzeichnet, daß** die Zeitdauer mehrerer, vorzugsweise aller Synchronisationsimpulse einzeln mit der erzeugten Oszillatorfrequenz abgezählt und aus der Menge der Zählwerte der aktuelle Wert des Abstandes zwischen zwei empfangsseitigen Systemtakten (aktueller Systemtaktabstand) abgeleitet wird,

a) indem das Nächstganzzahlige des arithmetischen Mittelwertes der Zählwerte als Wert des Abstandes verwendet wird, oder

b) indem als Wert des Abstandes das Nächstganzzahlige des arithmetischen Mittelwertes der Zählwerte verwendet wird, die innerhalb des Wertebereichs liegen und, falls keiner der Zählwerte im Wertebereich liegt,

ba) entweder als aktueller Wert des Abstandes der letztvorherige Wert des Abstandes gewählt wird oder

bb) als aktueller Wert des Abstandes ein vorgegebener Hilfswert gewählt wird.

13. Verfahren nach Anspruch 12, **dadurch gekennzeichnet,** daß der Hilfswert ein ganzzahliger Teil des im Normalbetrieb gemäß dem vorgegebenen Wertebereichs üblichen Impulsabstandes, zumindest die Hälfte, vorzugsweise ein Viertel ist, so daß der daraus abgeleitete Systemtakt entsprechend eine höhere Taktfrequenz aufweist, zumindest die Doppelte, vorzugsweise die Vierfache als im Normalbetrieb.

14. Verfahren gemäß einem der Ansprüche 10 bis 13, **dadurch gekennzeichnet, daß** zur Takterzeugung aus der erfaßten Taktinformation

- synchron zumindest mit dem Beginn des ersten Datenimpulses ein Systemtakt erzeugt wird,

- die Zählung der Anzahl der Oszillatortakte neu gestartet und bis zum aktuellen Wert des Abstandes zwischen zwei Systemtakten fortgesetzt wird, und, entsprechend dem Prinzip eines Überlaufzählers,

- jeweils bei Übereinstimmung der gezählten Anzahl von Oszillatortakte mit dem aktuellen Wert des Abstandes ein weiterer Systemtakt erzeugt und die Zählung der Oszillatortakte neu begonnen wird.

15. Verfahren nach Anspruch 14, **dadurch gekennzeichnet, daß** die Erzeugung der Systemtakte fortgesetzt wird, bis die vorbestimmte Datenimpulsanzahl innerhalb des Datenwortes erreicht ist.

16. Verfahren nach Anspruch 14, **dadurch gekennzeichnet, daß** die Erzeugung der Systemtakte fortgesetzt wird, bis eine Totzeit bzw. eine Abschaltung einer Spannungsversorgung erfolgt.

17. Verfahren gemäß Anspruch 9, **dadurch gekennzeichnet, daß** zur erstmaligen Erfassung der Taktfrequenzinformation bei übertragenen digitalen Daten

- die Zeitdauer des Synchronisationsimpulses mit einer empfangsseitig erzeugten Oszillatorfrequenz verglichen wird, wobei die Oszillatorfrequenz deutlich größer, vorzugsweise ein Vielfaches, der Impulsdauer ist,

- und die während der Zeitdauer des Synchronisationsimpulses auftretenden Oszillatortakte als Zählwert erfaßt werden

- und daraus die Taktfrequenzinformation gewonnen wird, indem aus der Zeitdauer des Synchronisationsimpulses die Taktfrequenzinformation in Form der aktuellen Impulsrahmenbreite abgeleitet wird.

**18.** Verfahren gemäß Anspruch 17, **dadurch gekennzeichnet**, daß nach dem Prinzip eines Überlaufzählers zur Takterzeugung aus der aktuellen Taktfrequenzinformation

- synchron zumindest mit dem Beginn des ersten Datenimpulses ein Impulsrahmentakt erzeugt und ausgegeben wird,

- in einem ersten Zähler die Zählung der Anzahl der Oszillatortakte neu gestartet und bis zum aktuellen Wert der Impulsrahmenbreite fortgesetzt wird, und, entsprechend dem Prinzip eines Überlaufzählers,

- jeweils bei Übereinstimmung der gezählten Anzahl von Oszillatortakte mit dem aktuellen Wert der Impulsrahmenbreite ein weiterer Impulsrahmentakt erzeugt und die Zählung der Oszillatortakte neu begonnen wird.

**19.** Verfahren gemäß den Ansprüchen 17 oder 18, **dadurch gekennzeichnet**, daß zur Gewinnung der nachfolgenden Impulsrahmentakte aus der aktuellen Impulsrahmenbreite indem

- synchron mit dem x-ten (x: = 1...n) Impulsrahmentakt,

- parallel und unabhängig zur Zählung der Anzahl der Oszillatortakte bis zum aktuellen x-ten Wert der Impulsrahmenbreite und zum Setzen des (x + 1)-ten (x:= 1...n) Impulsrahmentaktes,

- in einem zweiten Zähler die aktuelle Datenwortdauer durch Zählen der Anzahl der Oszillatortakte bis zum Pegelwechsel am Ende der zweiten Fixpegeldauer erfolgt und die aktuell ermittelte Datenwortdauer mit einem vorgegebenen Wertebereich verglichen wird und, :

  a) falls die aktuell ermittelte Datenwortdauer innerhalb des Wertebereichs liegt, der aktuelle x+1-te Wert der Impulsrahmenbreite auf diese gesetzt wird und der x+2-te Impulsrahmentakt bzgl. des x + 1-ten nunmehr nach der Dauer der aktuellen, x + 1-ten Impulsrahmenbreite erfolgt, **oder,**

  b) falls die aktuell ermittelte Datenwortdauer außerhalb des Wertebereichs liegt,

    ba) entweder als aktuelle Impulsrahmenbreite die letztvorherige gewählt wird oder

    bb) als aktuelle Impulsrahmenbreite ein vorgegebener Hilfswert gewählt wird.

**20.** Verfahren nach Anspruch 19, **dadurch gekennzeichnet,** daß der Hilfswert ein ganzzahliger Teil des im Normalbetrieb gemäß dem vorgegebenen Wertebereichs der üblichen Impulsrahmenbreite, zumindest die Hälfte, vorzugsweise ein Viertel ist, so daß der daraus abgeleitete System- oder Impulsrahmentakt entsprechend eine höhere Taktfrequenz aufweist, zumindest die Doppelte, vorzugsweise die Vierfache als im Normalbetrieb.

**21.** Verfahren nach einem der Ansprüche 14 bis 16, **dadurch gekennzeichnet, daß** zur Erzeugung des Datenübernahmetakts aus dem Systemtakt

- ein Datenübernahmetaktzähler nach dem Prinzip eines Überlaufzählers mit einem variablen Überlaufende vorgesehen ist,

- wobei der jeweils aktuelle Wert des Überlaufendes des Datenübernahmetaktzählers kleiner ist als der aktuelle Wert des Systemtaktabstandes,

- und der Datenübernahmetaktzähler vom aktuellen Systemtakt an die Oszillatortakte zählt bis das Überlaufende erreicht ist und dann ein gegenüber dem Systemtakt somit phasenverschobenes Datenübernahmetaktsignal abgibt,

- und daß die Zählung der Oszillatortakte erst bei Erreichen des nächsten Systemtaktes neu begonnen wird.

**22.** Verfahren nach Anspruch 21, **dadurch gekennzeichnet, daß** der Datenübernahmetakt bei ca. 50% des Systemtaktes erfolgt, indem der aktuelle Wert des überlaufendes auf das Nächstganzzahlige der Hälfte des aktuellen Wertes des Systemtaktabstandes gesetzt wird.

**23.** Verfahren nach einem der Ansprüche 14 bis 16, **dadurch gekennzeichnet, daß** zur Erzeugung des Datenübernahmetakts aus dem Systemtakt eine Abtastzeitspanne ($T_a$) vorgegeben wird, die

  a) innerhalb der Zeitdauer eines Systemtaktes ist,

  b) kürzer als der jeweils aktuelle Wert des Systemtaktabstandes ist und

  c) mit einer Verzögerungszeit ($T_R$) einsetzt, die sich aus

    ca) einem konstanten Wert oder

cb) aus einem definierten Bruchteil des Systemtaktabstandes ergibt, wobei zumindest einmal innerhalb der Abtastzeitspanne ($T_a$) der Pegel jedes Datenimpulses abgetastet wird.

24. Verfahren nach Anspruch 23, **dadurch gekennzeichnet, daß** die Abtastzeitspanne ($T_a$) ein Vielfaches der Oszillatorschwingungsdauer ist.

25. Verfahren nach den Ansprüchen 23 oder 24, **dadurch gekennzeichnet, daß** die Abtastzeitspanne ($T_a$) ca. 50% der Zeitdauer des Systemtaktabstandes ist.

26. Verfahren nach einem der Ansprüche 23 bis 25, **dadurch gekennzeichnet, daß** die Verzögerungszeit ($T_R$), nach der die Abtastzeitspanne ($T_a$) einsetzt, das Nächstganzzahlige von ca. 25% des Systemtaktabstandes ist.

27. Verfahren nach Anspruch 23 bis 26, **dadurch gekennzeichnet, daß** innerhalb der Abtastzeitspanne ($T_a$)

a) mit der Oszillatorfrequenz abgetastet wird, indem der Pegel jedes Datenimpulses konjunktiv mit dem Oszillatortakt verknüpft wird,.

b) die entstehenden Abtastimpulse abgezählt, der Abtastzählerwert erfaßt und daraus der Pegel des Datenimpulses bestimmt wird.

28. Verfahren nach Anspruch 27, **dadurch gekennzeichnet, daß** zur Erkennung des Datenimpulswertes der Abtastzählerwert mit einem Schwellwert verglichen wird, der zwischen dem Abtastzählerwert bei permanent anliegendem ersten Signalpegel und dem bei permanent anliegendem zweiten Signalpegel über die Abtastzeitspanne ($T_a$) liegt, vorzugsweise in der Mitte.

29. Verfahren nach einem der Ansprüche 19 oder 20, **dadurch gekennzeichnet, daß** zur Erzeugung des Datenübernahmetakts aus dem Impulsrahmentakt

a) von der aktuellen Impulsrahmendauer zunächst die Fixpegeldauer abgezogen wird, und

b) näherungsweise die aktuelle Zeitdauer eines Daten-Impulses abgeleitet wird, indem der erhaltene Wert durch die Anzahl der Datenimpulse innerhalb eines Datenwortes geteilt wird.

30. Verfahren nach Anspruch 29, **dadurch gekennzeichnet, daß** zur Erzeugung des Datenübernahmetakts aus der errechneten Zeitdauer eines Daten-Impulses

- ein Datenübernahmetaktgenerator nach dem Prinzip eines Überlaufzählers mit einem variablen Überlaufende vorgesehen ist,

- wobei Wert des Überlaufendes des Datenübernahmetaktgenerator kleiner ist als die aktuelle errechneten Zeitdauer eines Daten-Impulses,

- und der Datenübernahmetaktgenerator vom Impulsrahmentakt an die Oszillatortakte zählt bis das Überlaufende erreicht ist und dann ein somit gegenüber dem Impulsrahmentakt phasenverschobenes Datenübernahmetaktsignal (D) abgibt.

31. Verfahren nach einem der Ansprüche 29 oder 30, **dadurch gekennzeichnet, daß** der erste Datenübernahmetakt (D) bei ca. 50% der aktuell errechneten Zeitdauer eines Daten-Impulses erfolgt, indem das Überlaufende auf das Nächstganzzahlige der Hälfte der aktuell errechneten Zeitdauer eines Daten-Impulses gesetzt wird.

32. Verfahren nach Anspruch 31, **dadurch gekennzeichnet, daß** die nachfolgenden Datenübernahmetakte (D) jeweils nach der aktuell errechneten Zeitdauer eines Daten-Impulses erfolgen, indem das Überlaufende auf das Nächstganzzahlige der aktuell errechneten Zeitdauer eines Daten-Impulses gesetzt werden.

33. Verfahren nach einem der Ansprüche 19 oder 20, **dadurch gekennzeichnet, daß** eine Abtastzeitspanne ($T_a$) vorgegeben wird, die

a) kürzer als die der aktuell errechnete Zeitdauer eines Daten-Impulses ist und

c) mit einer Verzögerungszeit ($T_R$) einsetzt, die sich aus

ca) einem konstanten Wert oder

cb) aus einem definierten Bruchteil der aktuell errechneten Zeitdauer eines Daten-Impulses ergibt, wobei zumindest einmal innerhalb der Abtastzeitspanne ($T_a$) der Pegel des Daten-Impulses abgetastet wird.

34. Verfahren nach Anspruch 33, **dadurch gekennzeichnet, daß** die Abtastzeitspanne ($T_a$) ein Vielfaches der Oszillatorschwingungsdauer ist.

35. Verfahren nach den Ansprüchen 33 oder 34, **dadurch gekennzeichnet, daß** die Abtastzeit-

spanne ($T_a$) ca. 50% der aktuell errechneten Zeitdauer eines Daten-Impulses ist.

**36.** Verfahren nach Anspruch 35, **dadurch gekennzeichnet, daß** die Verzögerunszeit ($T_R$), nach der die Abtastzeitspanne ($T_a$) einsetzt, ca. 25% der aktuell errechneten Zeitdauer eines Daten-Impulses ist.

**37.** Verfahren nach einem der Ansprüche 33 bis 36, **dadurch gekennzeichnet, daß** innerhalb der Abtastzeitspanne $T_a$

a) mit der Frequenz des Vergleichsoszillators abgetastet wird, indem der Pegel des Datenimpulses konjunktiv mit dem Oszillatortakt verknüpft wird,

b) die entstehenden Abtastimpulse in einem Pegelwert-Zähler abgezählt, als Abtastzählerwert erfaßt und daraus der Pegel des Datenimpulses bestimmt wird.

**38.** Verfahren nach Anspruch 37, dadurch gekennzeichnet, daß zur Erkennung des Datenimpulswertes der Abtastzählerwert mit einem Schwellwert verglichen wird, der zwischen dem Abtastzählerwert bei permanent anliegendem ersten Signalpegel und dem bei permanent anliegendem zweiten Signalpegel über die Abtastzeitspanne ($T_a$) liegt, vorzugsweise in der Mitte.

**39.** Verfahren gemäß Anspruch 19 oder 20, **dadurch gekennzeichnet, daß** zur Abtastung eines PWM-Datenwortes mit Hilfe des Impulsrahmentaktes
eine Abtastzeitspanne vorgegeben wird, die

a) kürzer als der aktuelle Wert des Impulsrahmenabstandes ist und

b) mit einer Verzögerungszeit einsetzt, die sich aus

ba) einem konstanten Wert oder

bb) aus einem definierten Bruchteil des aktuellen Wertes des Impulsrahmenabstandes ergibt, wobei innerhalb der Abtastzeitspanne der Pegel jedes Daten-Impulses zumindest einmal abgetastet wird,

c) die Abtastzeitspanne ein Vielfaches der Oszillatorschwingungsdauer ist, und

d) innerhalb der Abtastzeitspanne der Pegel des PWM-Datenwortes mit der Frequenz des Vergleichsoszillators abgetastet wird, indem der Pegel des Datenwortes konjunktiv mit dem Oszillatortakt verknüpft wird,

e) die entstehenden Abtastimpulse abgezählt und als Abtastzählerwert erfaßt wird und

f) zur Erkennung des Datenimpulswertes der Abtastzählerwert mit einer Anzahl von Schwellen verglichen werden, wobei die Anzahl und der Wert der Schwellen durch die Anzahl und den Sollwert der möglichen logischen Pegel bestimmt wird,
wobei vorzugsweise bei jeweils gleichen Schritten, bestehend aus einer Anzahl von Oszillatortakte, zwischen zwei aufeinander folgenden logischen Pegeln jeweils entsprechend mittig die Schwelle angeordnet ist.

**39.** Verfahren nach einem der vorhergehenden Ansprüche, **dadurch gekennzeichnet**, daß die Datenübertragungsgeschwindigkeit durch Anpassung der Taktfrequenzinformation veränderbar ist und die Datenübernahmetaktgeneratoren nach einer Synchronisierungsphase entsprechend angepaßt werden.

**40.** Steuersystem zur Durchführung des Verfahrens nach einem der vorangehenden Ansprüche , **dadurch gekennzeichnet**, daß jedes periphere Modul eine Taktfrequenzinformationserfassungsschaltung aufweist, die mittels eines Oszillators getaktet die Taktfrequenzinformation erfaßt und an einen in seiner Taktfrequenz veränderbaren Taktgenerator weiterleitet, der, wiederum getaktet von dem gleichen Oszillator, einen der Taktfrequenzinformation entsprechenden Systemtakt erzeugt.

**41.** Steuersystem nach Anspruch 40, **dadurch gekennzeichnet**, daß die Taktfrequenzinformationserfassungsschaltung einen Zähler inmfaßt, welcher die Taktfrequenzinformation in Form der Anzahl der Oszillatortakte erfaßt und der Zählwert der Oszillatortakte an den Taktgenerator weitergeleitet wird, der seinerseits wieder einen Zähler aufweist, der die Anzahl der Oszillatortakte abzählt und beim Erreichen des Zählwertes jeweils einen Systemtakt erzeugt.

**42.** Steuersystem nach Anspruch 41, **dadurch gekennzeichnet**, daß jedes periphere Modul

- einen ersten Speicher aufweist, in dem der von der Taktfrequenzinformationserfassungsschaltung ermittelte Zählwert jeweils abgespeichert wird,

- mit dem ersten Speicher ein zweiter Speicher über ein erstes Numerikglied verbunden ist, wobei das Numerikglied auf einen bestimmten Teiler und/oderSubtrahend vom Speicherwert des ersten Speicher programmiert wird und den entsprechenden Wert im zweiten Speicher ablegt,

-   analog dazu mit dem ersten Speicher ein dritter Speicher über ein zweites Numerikglied verbunden ist, wobei auch dieses Numerikglied auf einen bestimmten Teiler und/oderSubtrahend vom Speicherwert des ersten Speicher programmiert wird und den entsprechenden Wert nun im dritten Speicher ablegt,

-   ein erster Zähler getaktet vom gleichen Oszillator, wie die Taktfrequenzinformationsschaltung, die Anzahl der Oszillatortakte zählt und der Zählwert jeweils an eine Vergleichsschaltung gegeben wird, welche den Zählwert mit dem Speicherwert des ersten Zählers vergleicht und beim Erreichen des Speicherwerts einen Systemtakt erzeugt,

-   der Zählwert des ersten Zählers des weiteren auch von einer zweiten Vergleichsschaltung mit dem im zweiten Speicher abgelegten Speicherwert verglichen wird und beim Erreichen des Speicherwertes ein Impuls an den Set-Eingang eines Abtastfenster-Flip-Flops gesendet wird,

-   rückgesetzt vom Impuls der zweiten vergleichsschaltung ein zweiter, ebenfalls vom gleichen Oszillator getakteter Zähler die Anzahl der Oszillatortakte zählt und eine dritte vergleichsschaltung den Zählwert des zweiten Zählers mit dem Speicherwert des dritten Speichers vergleicht und bei Erreichen des Speicherwertes einen Impuls an den Reset-Eingang des Abtastfenster-Flip-Flops gesendet wird,

-   das Abtastfenster-Flip-Flop für die Zeitdauer zwischen dem Impuls am Setund dem am Reset-Eingang einen Ausgangsimpuls entsprechender Breite an eine Datenübernahmeschaltung sendet und diese für diese Zeitdauer das übertragene Signal konjunktiv mit dem Oszillatortakt verknüpft und die Datenübernahmeschaltung einen Zähler aufweist, der die Anzahl der Oszillatortakte zählt, bei denen ein bestimmter Datenpegel anlag, und der Zählwert dan in einem Komparator mit mindestens einer Schwelle verglichen und daraus der Datenpegel abgeleitet wird.

FIG.1

FIG.2

FIG. 3

FIG.4

**FIG. 5**

2.23

2.21

2.19

2.14

2.18

2.57

2.56

2.55

2.54

2.51

2.52

2.53

2.36

2.38

2.37

2.50

2.33

2.34

2.35

2.49

2.32₁

2.32₂

2.32₃

2.47

2.20

FIG.6

FIG. 7

FIG. 8

FIG.9

FIG. 10

FIG. 11

FIG. 12

FIG. 13

EP 0 813 321 A2

FIG. 14a

SW  SB  T normal  ΔS  A

D normal  DW

FIG. 14b

SB  T normal  DW

D 4x  D

FIG. 14c

SW  DW

D

SW  SB  DW

T 4x

D 4x

FIG. 15